(19) Europäisches Patentamt
European Patent Office
Office européen des brevets

(11) **EP 4 380 118 A1**

(12) **EUROPEAN PATENT APPLICATION**
published in accordance with Art. 153(4) EPC

(43) Date of publication:
**05.06.2024 Bulletin 2024/23**

(21) Application number: **22848549.6**

(22) Date of filing: **26.07.2022**

(51) International Patent Classification (IPC):
***H04L 27/26*** *(2006.01)*

(52) Cooperative Patent Classification (CPC):
**H04L 27/26**

(86) International application number:
**PCT/CN2022/108042**

(87) International publication number:
**WO 2023/005944 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.07.2021 CN 202110867200**

(71) Applicant: **Huawei Technologies Co., Ltd.
Shenzhen, Guangdong 518129 (CN)**

(72) Inventors:
• HU, Yuanzhou
 Shenzhen, Guangdong 518129 (CN)
• FENG, Qi
 Shenzhen, Guangdong 518129 (CN)
• HUANG, Huang
 Shenzhen, Guangdong 518129 (CN)
• BI, Xiaoyan
 Shenzhen, Guangdong 518129 (CN)

(74) Representative: **Goddar, Heinz J. et al
Boehmert & Boehmert
Anwaltspartnerschaft mbB
Pettenkoferstrasse 22
80336 München (DE)**

(54) **DATA TRANSMISSION METHOD AND RELATED APPARATUS**

(57) This application provides a data transmission method and a related apparatus. The method includes: performing cyclic shift on first modulated data based on a cyclic shift value, to obtain second modulated data; determining a single carrier frequency division multiple access SC-FDMA symbol of the second modulated data based on the second modulated data; and outputting the SC-FDMA symbol of the second modulated data, where the cyclic shift value is an element in a cyclic shift value set, and the cyclic shift value set includes at least two different elements. Implementation of embodiments of this application helps reduce a peak-to-average power ratio of a signal.

FIG. 3A

## Description

This application claims priority to Chinese Patent Application No. 202110867200.7, filed with the China National Intellectual Property Administration on July 29, 2021 and entitled "DATA TRANSMISSION METHOD AND RELATED APPARATUS", which is incorporated herein by reference in its entirety.

## TECHNICAL FIELD

This application relates to the field of communication technologies, and in particular, to a data transmission method and a related apparatus.

## BACKGROUND

Currently, modulation is generally performed by using an orthogonal frequency division multiplexing (orthogonal frequency division multiplexing, OFDM) technology, so that a capability of resistance to frequency-selective channel fading is strong, inter-symbol interference is small, and the like. However, a peak to average power ratio (peak to average power ratio, PAPR) of an OFDM symbol is excessively high, and power of an output waveform that passes through a power amplifier (power amplifier, PA) is limited. In comparison with the PAPR of the OFDM symbol, a PAPR of an SC-FDMA symbol generated by using a single carrier frequency division multiple access (single carrier frequency division multiple access, SC-FDMA) technology is reduced. However, a new technology is still required to further reduce the PAPR. Therefore, how to reduce a PAPR of a signal becomes a technical problem that needs to be urgently resolved in a current phase.

## SUMMARY

This application provides a data transmission method and a related apparatus, to reduce a PAPR of a signal.

According to a first aspect, a data transmission method is provided, where the method includes: performing cyclic shift on first modulated data based on a cyclic shift value, to obtain second modulated data; determining a single carrier frequency division multiple access (single carrier frequency division multiple access, SC-FDMA) symbol of the second modulated data based on the second modulated data; and outputting the SC-FDMA symbol of the second modulated data, where the cyclic shift value is an element in a cyclic shift value set, and the cyclic shift value set includes at least two different elements.

It can be learned that in the foregoing technical solution, cyclic shift may be performed on the first modulated data based on the cyclic shift value in the cyclic shift value set that includes at least two different elements to obtain the second modulated data, and the SC-FDMA symbol of the second modulated data may further be determined based on the second modulated data. Because the second modulated data is obtained by performing cyclic shift, and the cyclic shift value is determined from the cyclic shift value set that includes at least two different elements, a PAPR of the SC-FDMA symbol of the second modulated data is lower than a PAPR of an OFDM waveform, and is also lower than a PAPR of a conventional SC-FDMA symbol, to be specific, is lower than a PAPR of an SC-FDMA symbol obtained without the cyclic shift, so that a PAPR of a signal is further reduced. In addition, the SC-FDMA symbol that is of the second modulated data and has a low PAPR is output, so that demodulation performance of a receiving end can be improved.

In a possible implementation, the first modulated data includes a real part of the first modulated data and an imaginary part of the first modulated data, the second modulated data includes a real part of the second modulated data and an imaginary part of the second modulated data, and the performing cyclic shift on first modulated data based on a cyclic shift value, to obtain second modulated data includes: performing cyclic shift on the real part of the first modulated data based on a first cyclic shift value, to obtain the real part of the second modulated data, where the imaginary part of the second modulated data is the same as the imaginary part of the first modulated data; or performing cyclic shift on the imaginary part of the first modulated data based on a second cyclic shift value, to obtain the imaginary part of the second modulated data, where the real part of the second modulated data is the same as the real part of the first modulated data, and the cyclic shift value includes the first cyclic shift value or the second cyclic shift value.

It can be learned that in the foregoing technical solution, cyclic shift is performed on the real part of the modulated data based on the first cyclic shift value to obtain the real part of the second modulated data, where the imaginary part of the second modulated data is the same as the imaginary part of the first modulated data; or cyclic shift is performed on the imaginary part of the modulated data based on the second cyclic shift value, where the real part of the second modulated data is the same as the real part of the first modulated data. Because the second modulated data is obtained by performing cyclic shift, and the cyclic shift value is determined from the cyclic shift value set that includes at least two different elements, the PAPR of the SC-FDMA symbol of the second modulated data is lower than the PAPR of the OFDM waveform, and is also lower than the PAPR of the conventional SC-FDMA symbol, to be specific, is lower than the PAPR of the SC-FDMA symbol obtained without the cyclic shift, so that the PAPR of a signal is further reduced.

According to a second aspect, a data transmission method is provided, where the method includes: determining an SC-FDMA symbol of first modulated data based on the first modulated data; performing cyclic shift on the SC-FDMA symbol of the first modulated data based on a cyclic shift value, to obtain a cyclic-shifted SC-FDMA symbol of the first modulated data; and outputting the cyclic-shifted SC-FDMA symbol of the first modulated data, where the cyclic shift value is an element in a cyclic shift value set, and the cyclic shift value set includes at least two different elements.

It can be learned that in the foregoing technical solution, the SC-FDMA symbol of the first modulated data may be determined based on the first modulated data, and cyclic shift may further be performed on the SC-FDMA symbol of the first modulated data based on the cyclic shift value, to obtain the cyclic-shifted SC-FDMA symbol of the first modulated data. For different cyclic shift values, the SC-FDMA symbol of the first modulated data does not need to be regenerated, so that calculation complexity is low, and implementation is easy. In addition, because the cyclic-shifted SC-FDMA symbol of the first modulated data is related to the cyclic shift value in the cyclic shift value set that includes at least two different elements, a PAPR of the cyclic-shifted SC-FDMA symbol of the first modulated data is lower than a PAPR of an OFDM waveform, and is also lower than a PAPR of a conventional SC-FDMA symbol, to be specific, is lower than a PAPR of an SC-FDMA symbol obtained without the cyclic shift, so that a PAPR of a signal is further reduced. In addition, the cyclic-shifted SC-FDMA symbol that is of the first modulated data and that has a low PAPR is output, so that demodulation performance of a receiving end is improved.

In a possible implementation, the SC-FDMA symbol of the first modulated data includes an SC-FDMA symbol corresponding to a real part of the first modulated data and an SC-FDMA symbol corresponding to an imaginary part of the first modulated data, and the performing cyclic shift on the SC-FDMA symbol of the first modulated data based on a cyclic shift value, to obtain a cyclic-shifted SC-FDMA symbol of the first modulated data includes: performing, based on a first cyclic shift value, cyclic shift on the SC-FDMA symbol corresponding to the real part of the first modulated data, to obtain a first SC-FDMA symbol, and combining the first SC-FDMA symbol and the SC-FDMA symbol corresponding to the imaginary part of the first modulated data, to obtain the cyclic-shifted SC-FDMA symbol of the first modulated data; or performing, based on a second cyclic shift value, cyclic shift on the SC-FDMA symbol corresponding to the imaginary part of the first modulated data, to obtain a second SC-FDMA symbol, and combining the SC-FDMA symbol corresponding to the real part of the first modulated data and the second SC-FDMA symbol, to obtain the cyclic-shifted SC-FDMA symbol of the first modulated data, where the cyclic shift value includes the first cyclic shift value or the second cyclic shift value.

It can be learned that in the foregoing technical solution, the first SC-FDMA symbol and the SC-FDMA symbol corresponding to the imaginary part of the first modulated data are combined to obtain the cyclic-shifted SC-FDMA symbol of the first modulated data; or the SC-FDMA symbol corresponding to the real part of the first modulated data and the second SC-FDMA symbol are combined to obtain the cyclic-shifted SC-FDMA symbol of the first modulated data, that is, for different cyclic shift values, the SC-FDMA symbol of the first modulated data do not need to be regenerated, so that calculation complexity is low, and implementation is easy. In addition, because the cyclic-shifted SC-FDMA symbol of the first modulated data is related to the cyclic shift value in the cyclic shift value set that includes at least two different elements, the PAPR of the cyclic-shifted SC-FDMA symbol of the first modulated data is lower than the PAPR of the OFDM waveform, and is also lower than the PAPR of the conventional SC-FDMA symbol, to be specific, is lower than the PAPR of the SC-FDMA symbol obtained without the cyclic shift, so that the PAPR of a signal is further reduced.

With reference to the first aspect or the second aspect, in a possible implementation, the cyclic-shifted SC-FDMA symbol of the first modulated data is an SC-FDMA symbol obtained through phase rotation. It may be understood that a phase difference between the SC-FDMA symbol corresponding to the real part of the first modulated data and the SC-FDMA symbol corresponding to the imaginary part of the first modulated data is adjusted through phase rotation. For example, a phase difference between the first SC-FDMA symbol and the SC-FDMA symbol corresponding to the imaginary part of the first modulated data is adjusted; or a phase difference between the SC-FDMA symbol corresponding to the real part of the first modulated data and the second SC-FDMA symbol is adjusted, so that an amplitude of a maximum value of the cyclic-shifted SC-FDMA symbol of the first modulated data obtained through combination is reduced, that is, a probability of co-directional superposition is reduced, and the PAPR of a signal is further reduced.

With reference to the first aspect or the second aspect, in a possible implementation, the data transmission method further includes: outputting first information, where the first information indicates the cyclic shift value. In other words, the receiving end can know the cyclic shift value used by the transmitting end, so that a probability that the receiving end detects and obtains an incorrect cyclic shift value is reduced, and the demodulation performance is improved.

With reference to the first aspect or the second aspect, in a possible implementation, the first modulated data further includes modulated data obtained by modulating the first information, or the first modulated data further includes a first sequence, the first information indicates the cyclic shift value, and the first sequence corresponds to the cyclic shift value. That is, the cyclic shift value is implicitly or explicitly indicated.

With reference to the first aspect or the second aspect, in a possible implementation, a quantity $N_{cs}$ of elements in the cyclic shift value set is indicated by first RRC signaling, so that the transmitting end can know the quantity of elements in the cyclic shift value set.

With reference to the first aspect or the second aspect, in a possible implementation, values of the elements in the cyclic shift value set are determined based on the quantity of elements in the cyclic shift value set. The values of the elements in the cyclic shift value set are determined based on the quantity of elements in the cyclic shift value set, so that the values of the elements in the cyclic shift value set do not need to be indicated, and overheads are reduced.

With reference to the first aspect or the second aspect, in a possible implementation, a value of an $i_{cs}$ th element in the cyclic shift value set is $i_{cs} \times \frac{M}{N_{cs}}$, where $i_{cs}$ is an integer greater than or equal to 0 and less than or equal to $N_{cs}$ - 1, $N_{cs}$ is the quantity of elements in the cyclic shift value set, and $M$ is a length of the first modulated data. By using the formula $i_{cs} \times \frac{M}{N_{cs}}$, the values of the elements in the cyclic shift value set do not need to be indicated, so that the overheads are reduced, and complexity of a generated SC-FDMA symbol is also low.

With reference to the first aspect or the second aspect, in a possible implementation, the first modulated data further includes at least one group of phase tracking reference signals PTRSs, and a quantity of groups of the PTRSs is determined based on the quantity of elements in the cyclic shift value set, so that any group of PTRSs after cyclic shift is performed on the first modulated data is not interfered by the modulated data.

According to a third aspect, a communication apparatus is provided, where the communication apparatus may be configured to perform the method according to the first aspect. The communication apparatus may be a terminal device or a network device, may be an apparatus in a terminal device or a network device (for example, a chip, a chip system, or a circuit), or may be an apparatus that can be used in matching with a terminal device or a network device. The communication apparatus may include modules or units that are in one-to-one correspondence with the method/operations/steps/actions described in the first aspect. The modules or units may be hardware circuits, may be software, or may be implemented by hardware circuits in combination with software.

In a possible implementation, the communication apparatus includes a processing module and a transceiver module. The processing module is configured to: perform cyclic shift on first modulated data based on a cyclic shift value, to obtain second modulated data; the processing module is further configured to determine a single carrier frequency division multiple access SC-FDMA symbol of the second modulated data based on the second modulated data; and the transceiver module is configured to output the SC-FDMA symbol of the second modulated data, where the cyclic shift value is an element in a cyclic shift value set, and the cyclic shift value set includes at least two different elements.

With reference to the third aspect, in a possible implementation, the first modulated data includes a real part of the first modulated data and an imaginary part of the first modulated data, the second modulated data includes a real part of the second modulated data and an imaginary part of the second modulated data, and when performing cyclic shift on the first modulated data based on the cyclic shift value to obtain second modulated data, the processing module is configured to: perform cyclic shift on the real part of the first modulated data based on a first cyclic shift value, to obtain the real part of the second modulated data, where the imaginary part of the second modulated data is the same as the imaginary part of the first modulated data; or perform cyclic shift on the imaginary part of the first modulated data based on a second cyclic shift value, to obtain the imaginary part of the second modulated data, where the real part of the second modulated data is the same as the real part of the first modulated data, and the cyclic shift value includes the first cyclic shift value or the second cyclic shift value.

With reference to the third aspect, in a possible implementation, the processing module is a processor, and the transceiver module is a transceiver.

According to a fourth aspect, a communication apparatus is provided, where the communication apparatus may be configured to perform the method according to the second aspect. The communication apparatus may be a terminal device or a network device, may be an apparatus in a terminal device or a network device (for example, a chip, a chip system, or a circuit), or may be an apparatus that can be used in matching with a terminal device or a network device. The communication apparatus may include modules or units that are in one-to-one correspondence with the method/operations/steps/actions described in the second aspect. The modules or units may be hardware circuits, may be software, or may be implemented by hardware circuits in combination with software.

In a possible implementation, the communication apparatus includes a processing module and a transceiver module. The processing module is configured to determine an SC-FDMA symbol of first modulated data based on the first modulated data; the processing module is further configured to: perform cyclic shift on the SC-FDMA symbol of the first modulated data based on a cyclic shift value, to obtain a cyclic-shifted SC-FDMA symbol of the first modulated data; and the transceiver module is configured to output the cyclic-shifted SC-FDMA symbol of the first modulated data, where the cyclic shift value is an element in a cyclic shift value set, and the cyclic shift value set includes at least two different elements.

With reference to the fourth aspect, in a possible implementation, the SC-FDMA symbol of the first modulated data includes an SC-FDMA symbol corresponding to a real part of the first modulated data and an SC-FDMA symbol corresponding to an imaginary part of the first modulated data; and when performing cyclic shift on the SC-FDMA symbol of the first modulated data based on the cyclic shift value to obtain the cyclic-shifted SC-FDMA symbol of the first modulated data, the processing module is configured to: perform, based on a first cyclic shift value, cyclic shift on the SC-FDMA symbol corresponding to the real part of the first modulated data, to obtain a first SC-FDMA symbol, and combine the first SC-FDMA symbol and the SC-FDMA symbol corresponding to the imaginary part of the first modulated data, to obtain the cyclic-shifted SC-FDMA symbol of the first modulated data; or perform, based on a second cyclic shift value, cyclic shift on the SC-FDMA symbol corresponding to the imaginary part of the first modulated data, to obtain a second SC-FDMA symbol, and combine the SC-FDMA symbol corresponding to the real part of the first modulated data and the second SC-FDMA symbol, to obtain the cyclic-shifted SC-FDMA symbol of the first modulated data, where the cyclic shift value includes the first cyclic shift value or the second cyclic shift value.

With reference to the fourth aspect, in a possible implementation, the processing module is a processor, and the transceiver module is a transceiver.

According to a fifth aspect, an embodiment of this application further provides a communication apparatus, where the communication apparatus includes a logic circuit and an input/output interface. The logic interface is configured to: perform cyclic shift on first modulated data based on a cyclic shift value, to obtain second modulated data; the logic circuit is further configured to determine a single carrier frequency division multiple access SC-FDMA symbol of the second modulated data based on the second modulated data; and the input/output interface is configured to output the SC-FDMA symbol of the second modulated data, where the cyclic shift value is an element in a cyclic shift value set, and the cyclic shift value set includes at least two different elements.

With reference to the fifth aspect, in a possible implementation, the first modulated data includes a real part of the first modulated data and an imaginary part of the first modulated data, the second modulated data includes a real part of the second modulated data and an imaginary part of the second modulated data, and when performing cyclic shift on the first modulated data based on the cyclic shift value to obtain the second modulated data, the logic circuit is configured to: perform cyclic shift on the real part of the first modulated data based on a first cyclic shift value, to obtain the real part of the second modulated data, where the imaginary part of the second modulated data is the same as the imaginary part of the first modulated data; or perform cyclic shift on the imaginary part of the first modulated data based on a second cyclic shift value, to obtain the imaginary part of the second modulated data, where the real part of the second modulated data is the same as the real part of the first modulated data, and the cyclic shift value includes the first cyclic shift value or the second cyclic shift value.

According to a sixth aspect, an embodiment of this application further provides a communication apparatus, where the communication apparatus includes a logic circuit and an input/output interface. The logic circuit is configured to determine an SC-FDMA symbol of first modulated data based on the first modulated data; the logic circuit is further configured to: perform cyclic shift on the SC-FDMA symbol of the first modulated data based on a cyclic shift value, to obtain a cyclic-shifted SC-FDMA symbol of the first modulated data; and the input/output interface is configured to output the cyclic-shifted SC-FDMA symbol of the first modulated data, where the cyclic shift value is an element in a cyclic shift value set, and the cyclic shift value set includes at least two different elements.

With reference to the sixth aspect, in a possible implementation, the SC-FDMA symbol of the first modulated data includes an SC-FDMA symbol corresponding to a real part of the first modulated data and an SC-FDMA symbol corresponding to an imaginary part of the first modulated data; and when performing cyclic shift on the SC-FDMA symbol of the first modulated data based on the cyclic shift value to obtain the cyclic-shifted SC-FDMA symbol of the first modulated data, the logic circuit is configured to: perform, based on a first cyclic shift value, cyclic shift on the SC-FDMA symbol corresponding to the real part of the first modulated data, to obtain a first SC-FDMA symbol, and combine the first SC-FDMA symbol and the SC-FDMA symbol corresponding to the imaginary part of the first modulated data, to obtain the cyclic-shifted SC-FDMA symbol of the first modulated data; or perform, based on a second cyclic shift value, cyclic shift on the SC-FDMA symbol corresponding to the imaginary part of the first modulated data, to obtain a second SC-FDMA symbol, and combine the SC-FDMA symbol corresponding to the real part of the first modulated data and the second SC-FDMA symbol, to obtain the cyclic-shifted SC-FDMA symbol of the first modulated data, where the cyclic shift value includes the first cyclic shift value or the second cyclic shift value.

With reference to the third aspect, the fourth aspect, the fifth aspect, or the sixth aspect, in a possible implementation, the cyclic-shifted SC-FDMA symbol of the first modulated data is an SC-FDMA symbol obtained through phase rotation.

With reference to the third aspect or the fourth aspect, in a possible implementation, the transceiver module is further configured to output first information, where the first information indicates the cyclic shift value.

With reference to the fifth aspect or the sixth aspect, in a possible implementation, the input/output interface is further configured to output first information, where the first information indicates the cyclic shift value.

With reference to the third aspect, the fourth aspect, the fifth aspect, or the sixth aspect, in a possible implementation, the first modulated data further includes modulated data obtained by modulating the first information, or the first modulated data further includes a first sequence, the first information indicates the cyclic shift value, and the first sequence corresponds to the cyclic shift value.

With reference to the third aspect, the fourth aspect, the fifth aspect, or the sixth aspect, in a possible implementation, a quantity $N_{cs}$ of elements in the cyclic shift value set is indicated by first RRC signaling.

With reference to the third aspect, the fourth aspect, the fifth aspect, or the sixth aspect, in a possible implementation, values of the elements in the cyclic shift value set are determined based on the quantity of elements in the cyclic shift value set.

With reference to the third aspect, the fourth aspect, the fifth aspect, or the sixth aspect, in a possible implementation, a value of an $i_{cs}$<sup>th</sup> element in the cyclic shift value set is $i_{cs} \times \dfrac{M}{N_{cs}}$, where $i_{cs}$ is an integer greater than or equal to 0 and less than or equal to $N_{cs}$ - 1, $N_{cs}$ is the quantity of elements in the cyclic shift value set, and M is a length of the first modulated data.

With reference to the third aspect, the fourth aspect, the fifth aspect, or the sixth aspect, in a possible implementation, the first modulated data further includes at least one group of phase tracking reference signals PTRSs, and a quantity of groups of the PTRSs is determined based on the quantity of elements in the cyclic shift value set.

For beneficial effects of various possible implementations of the third aspect, the fourth aspect, the fifth aspect, or the sixth aspect, refer to the descriptions in the first aspect or the second aspect. Details are not described herein again.

According to a seventh aspect, a communication apparatus is provided, including a processor, a memory, an input interface, and an output interface. The input interface is configured to receive information from a communication apparatus other than the communication apparatus, and the output interface is configured to output information to a communication apparatus other than the communication apparatus. The processor invokes a computer program stored in the memory to implement the method according to the first aspect or the second aspect.

In a possible design, the communication apparatus may be a chip or a device including a chip for implementing the method according to the first aspect or the second aspect.

According to an eighth aspect, an embodiment of this application further provides a communication apparatus, where the communication apparatus includes a processor, and the processor is configured to execute a computer program (or computer-executable instructions) stored in a memory. When the computer program (or the computer-executable instructions) is executed, the apparatus is enabled to perform the method in the first aspect and various possible implementations of the first aspect or the method in the second aspect and various possible implementations of the second aspect.

In a possible implementation, the processor and the memory are integrated together.

In another possible implementation, the memory is located outside the communication apparatus.

The communication apparatus further includes a communication interface, and the communication interface is used by the communication apparatus to communicate with another device, for example, to send or receive data and/or a signal. For example, the communication interface may be a transceiver, a circuit, a bus, a module, or another type of communication interface.

According to a ninth aspect, an embodiment of this application further provides a communication apparatus, where the communication apparatus is configured to perform the method in the first aspect and various possible implementations of the first aspect.

According to a tenth aspect, an embodiment of this application further provides a communication apparatus, where the communication apparatus is configured to perform the method in the second aspect and various possible implementations of the second aspect.

According to an eleventh aspect, a computer-readable- storage medium is provided, where the computer-readable storage medium stores a computer program (or computer-executable instructions), and when the computer program (or the computer-executable instructions) is run, the method in any possible implementation of the first aspect or the second aspect is performed.

According to a twelfth aspect, an embodiment of this application further provides a computer program product including computer-executable instructions. When the computer program product runs, some or all of the steps in the method according to any one of the first aspect and the possible implementations of the first aspect or any one of the second aspect and the possible implementations of the second aspect are performed.

According to a thirteenth aspect, an embodiment of this application further provides a computer program including computer-executable instructions. When the computer program is run, some or all of the steps in the method according to any one of the first aspect and the possible implementations of the first aspect or any one of the second aspect and the possible implementations of the second aspect are performed.

According to a fourteenth aspect, a communication system is provided, including one or more of the following:

the communication apparatus in any possible implementation of the third aspect to the tenth aspect.

**BRIEF DESCRIPTION OF DRAWINGS**

The following briefly describes accompanying drawings used in describing embodiments or a current technology.
Specifically:

FIG. 1 is a schematic diagram of an architecture of a communication system according to an embodiment of this application;
FIG. 2 is a schematic diagram of a hardware structure applicable to a communication apparatus according to an embodiment of this application;
FIG. 3A is a schematic flowchart of a data transmission method according to an embodiment of this application;
FIG. 3B is a schematic flowchart of another data transmission method according to an embodiment of this application;
FIG. 4A is a schematic flowchart of still another data transmission method according to an embodiment of this application;
FIG. 4B-1 and FIG. 4B-2 are a schematic flowchart of yet another data transmission method according to an embodiment of this application;

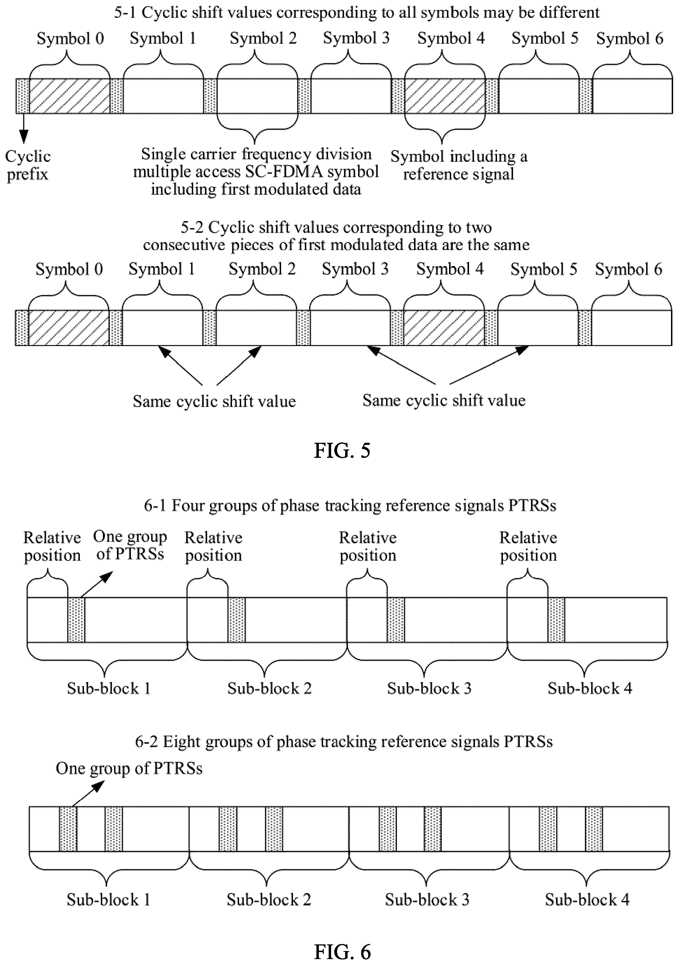

FIG. 5 is a schematic diagram of a symbol used to transmit first modulated data and a reference signal according to an embodiment of this application;
FIG. 6 is a schematic diagram of dividing first modulated data into four sub-blocks according to an embodiment of this application;

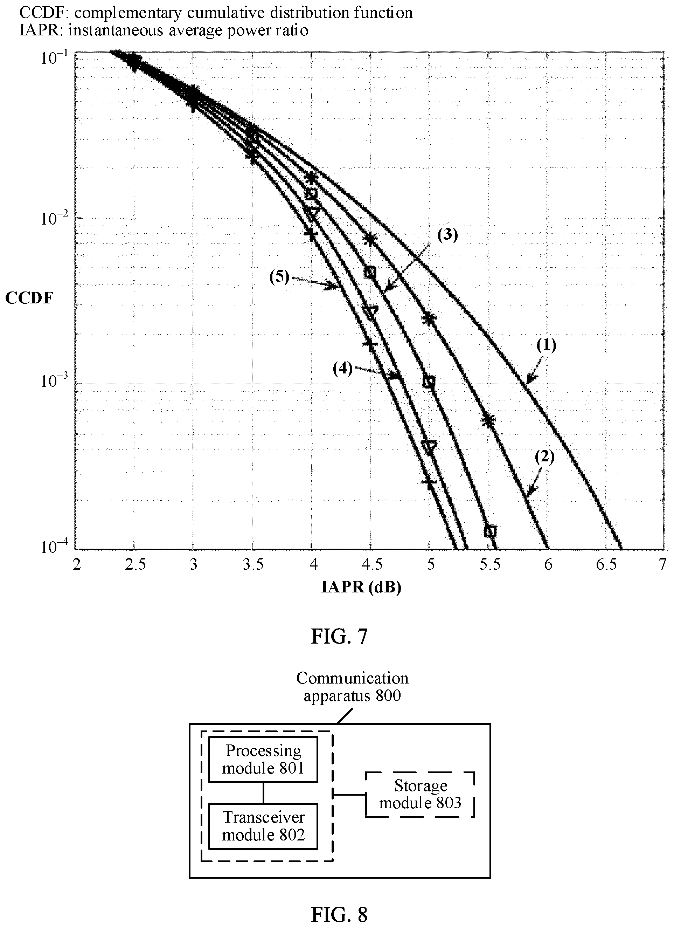

FIG. 7 is a schematic diagram of comparing PAPRs of SC-FDMA symbols;
FIG. 8 is a schematic diagram of a structure of a communication apparatus according to an embodiment of this application;

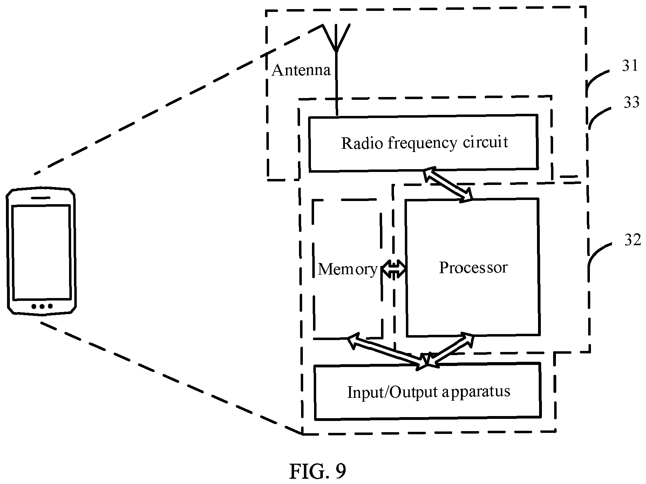

FIG. 9 is a schematic diagram of a structure of a simplified terminal device according to an embodiment of this application; and

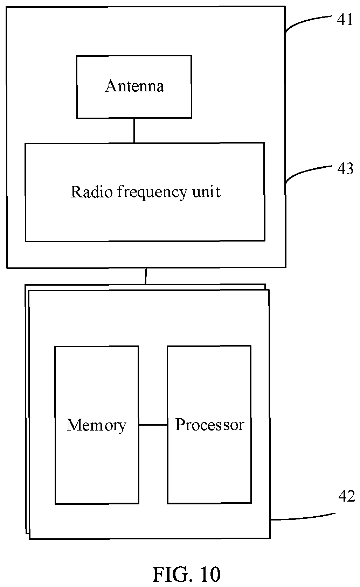

FIG. 10 is a schematic diagram of a structure of a simplified access network device according to an embodiment of this application.

**DESCRIPTION OF EMBODIMENTS**

The following describes the technical solutions in embodiments of this application with reference to the accompanying drawings in embodiments of this application. The terms "system" and "network" in embodiments of this application may be used interchangeably. Unless otherwise specified, "/" indicates an "or" relationship between associated objects. For example, A/B may indicate A or B; and "and/or" in this application is merely an association relationship for describing associated objects, and indicates that three relationships may exist. For example, A and/or B may indicate the following three cases: A exists alone, both A and B exist, and B exists alone, where A and B may be singular or plural. In addition, in the descriptions of this application, unless otherwise specified, "a plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, in embodiments of this application, terms such as "first" and "second" are used to distinguish between same items or similar items that have basically same functions and effects. A person skilled in the art may understand that the terms such as "first" and "second" do not limit a quantity or an execution sequence, and the terms such as "first" and "second" do not indicate a definite difference.
Reference to "an embodiment" or "some embodiments" or the like described in embodiments of this application means that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "comprise", "include", "have", and variations thereof all mean "including, but not limited to", unless otherwise specified in another manner.
Generally, an output waveform of a peak to average power ratio (peak to average power ratio, PAPR) that passes through a non-linear power amplifier (power amplifier, PA) is severely distorted, and as a result, demodulation performance of a receiver is severely affected. To reduce distortion of the output waveform after passing through the PA, power of an input waveform of the PA needs to be reduced. In this way, power of the output waveform is also reduced, and performance is reduced. Therefore, reducing the PAPR of the waveform is a key to improving the power of the output waveform after passing through the PA and reducing a distortion degree of the output waveform.

Currently, modulation is usually performed by using an orthogonal frequency division multiplexing (orthogonal frequency division multiplexing, OFDM) technology, so that a-capability of resistance to frequency-selective channel fading is strong, inter-symbol interference is small, and the like. However, a PAPR of an OFDM symbol is excessively high, and the power of the output waveform that passes through the PA is limited. In comparison with the PAPR of the OFDM symbol, a PAPR of an SC-FDMA symbol generated by using a single carrier frequency division multiple access (single carrier frequency division multiple access, SC-FDMA) technology is reduced. However, a new technology is still required to further reduce the PAPR. Therefore, how to reduce a PAPR of a signal becomes a technical problem that needs to be urgently resolved in a current phase.

Based on this, embodiments of this application provide a data transmission method to resolve the foregoing problem. The following describes embodiments of this application in detail.

It should be understood that, the technical solutions in embodiments of this application are applied to a cellular system related to the 3rd generation partnership project (3rd generation partnership project, 3GPP), for example, a 4th generation (4th generation, 4G) communication system such as a long term evolution (long term evolution, LTE) system, and a 5th generation (5th generation, 5G) communication system such as a new radio (new radio, NR) system, and may be further applied to a wireless fidelity (wireless fidelity, Wi-Fi) system, and a communication system that supports convergence of a plurality of wireless technologies. The technical solutions in embodiments of this application may be further applied to another future communication system. In the future communication system, functions may remain the same, but names may change.

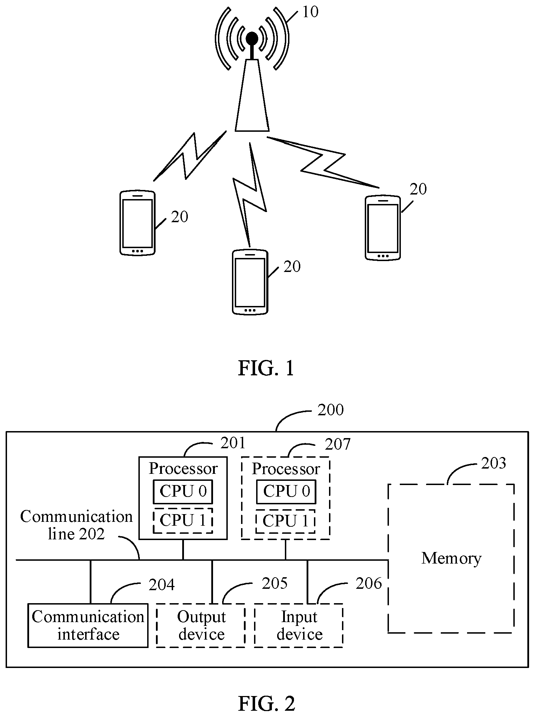

The following describes a basic architecture of a communication system provided in an embodiment of this application. Refer to FIG. 1. FIG. 1 is a schematic diagram of an architecture of a communication system according to an embodiment of this application. As shown in FIG. 1, the communication system may include one or more access network devices 10 (where only one access network device is shown in FIG. 1) and one or more terminal devices 20 that communicate with each access network device 10. FIG. 1 is merely a schematic diagram, and does not constitute a limitation on an application scenario of the technical solutions provided in this application.

The access network device 10 is a network side entity configured to: send a signal, or receive a signal, or send a signal and receive a signal. The access network device 10 may be an apparatus that is deployed in a radio access network (radio access network, RAN) to provide a wireless communication function for the terminal device 20, for example, may be a transmission reception point (transmission reception point, TRP), a base station, or a control node in various forms. For example, the access network device 10 may be a network controller, a radio controller, or a radio controller in a cloud radio access network (cloud radio access network, CRAN) scenario. Specifically, the access network device may be a macro base station, a micro base station (also referred to as a small cell), a relay station, an access point (access point, AP), a radio network controller (radio network controller, RNC), a home NodeB (for example, home evolved NodeB, or home NodeB, HNB), a baseband unit (baseBand unit, BBU), a transmission point (transmission point, TP), a mobile switching center, or the like in various forms, or may be an antenna panel of a base station and a device that undertakes a base station function in device-to-device (Device-to-Device, D2D), vehicle-to-everything (vehicle-to-everything, V2X), and machine-to-machine (machine-to-machine, M2M) communication, and the like. The control node may be connected to a plurality of base stations, and configure resources for a plurality of terminals covered by the plurality of base stations. In systems using different radio access technologies, names of devices having a base station function may vary. For example, the device may be a gNB in 5G, a network side device in a network after 5G, an access network device in a future evolved public land mobile network (public land mobile network, PLMN), or the like. A specific name of the access network device is not limited in this application. In addition, the access network device 10 may further include a central unit (central unit, CU) and a distributed unit (distributed unit, DU) that are integrated on the gNB.

The terminal device 20 is a user-side entity configured to receive a signal, or send a signal, or receive a signal and send a signal. The terminal device 20 is configured to provide one or more of a voice service and a data connection service for a user. The terminal device 20 may be a device that has a wireless transceiver function and may cooperate with the access network device to provide a communication service for a user. Specifically, the terminal device 20 may be user equipment (user equipment, UE), an access terminal, a subscriber unit, a subscriber station, a mobile station, a remote station, a remote terminal, a mobile device, a terminal, a wireless communication device, a user agent, or a user apparatus. The terminal device 20 may also be a drone, an internet of things (internet of things, IoT) device, or a station (station, ST) in a wireless local area network (wireless local area network, WLAN), a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device having a wireless communication function, a computing device or another processing device connected to a wireless modem, a vehicle-mounted device, a wearable device (also referred to as a wearable intelligent device), a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal device 20 may be a device-to-device (device-to-device, D2D) device, for example, an electricity meter or a water meter. Alternatively, the terminal device 20 may be a terminal in a 5G system, or may be a terminal in a next-generation communication system. This is not limited in embodiments of this application.

In addition, the technical solutions provided in embodiments of this application may be applicable to a plurality of system architectures. The network architecture and the service scenario described in embodiments of this application are intended to describe the technical solutions in embodiments of this application more clearly, but do not constitute a limitation on the technical solutions provided in embodiments of this application. A person of ordinary skill in the art may know that with evolution of the network architecture and emergence of a new service scenario, the technical solutions provided in embodiments of this application are also applicable to a similar technical problem.

Optionally, each network element in FIG. 1 (for example, the access network device 10 and the terminal device 20) may be implemented by one device, may be jointly implemented by a plurality of devices, or may be one functional module in one device. This is not specifically limited in embodiments of this application. It may be understood that the foregoing function may be a network element in a hardware device, a software function running on dedicated hardware, or a virtualization function instantiated on a platform (for example, a cloud platform).

For example, all devices in FIG. 1 may be implemented by using a communication apparatus 200 in FIG. 2. FIG. 2 is a schematic diagram of a hardware structure applicable to a communication apparatus according to an embodiment of this application. The communication apparatus 200 includes at least one processor 201, a communication line 202, and at least one communication interface 204.

The processor 201 may be a general-purpose central processing unit (central processing unit, CPU), a microprocessor, an application-specific integrated circuit (application-specific integrated circuit, ASIC), or one or more integrated circuits configured to control program execution in the solutions of this application.

The communication line 202 may include a path for transferring information between the components described above. For example, the communication line 202 may be classified into an address bus, a data bus, a control bus, and the like. For ease of representation, only one line is used in FIG. 2 for representation, but it does not indicate that there is only one bus or only one type of bus.

The communication interface 204 is an apparatus (such as an antenna) of any transceiver type, and is configured to communicate with another device or a communication network. For example, the communication network may be an Ethernet, a RAN, a WLAN, or the like.

Optionally, the communication apparatus 200 further includes a memory 203. The memory 203 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM), or another compact disc storage, optical disk storage (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure and that can be accessed by a computer. However, the memory 203 is not limited thereto. The memory may exist independently, and is connected to the processor by using the communication line 202. The memory may alternatively be integrated with the processor. The memory provided in this embodiment of this application may generally be non-volatile. The memory 203 is configured to store computer-executable instructions for executing the solutions of this application, and the processor 201 controls the execution. The processor 201 is configured to execute the computer-executable instructions stored in the memory 203, to implement the method provided in the following embodiments of this application.

Optionally, the computer-executable instructions in embodiments of this application may also be referred to as application program code. This is not specifically limited in embodiments of this application.

In a possible implementation, the processor 201 may include one or more CPUs, for example, a CPU 0 and a CPU 1 in FIG. 2.

In a possible implementation, the communication apparatus 200 may include a plurality of processors, for example, include the processor 201 and a processor 207 in FIG. 2. Each of these processors may be a single-core (single-CPU) processor, or may be a multi-core (multi-CPU) processor. The processor herein may be one or more devices, circuits, and/or processing cores configured to process data (for example, computer program instructions).

In a possible implementation, the communication apparatus 200 may further include an output device 205 and an input device 206. The output device 205 communicates with the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, a projector (projector), or the like. The input device 206 communicates with the processor 201, and may receive user input in a plurality of manners. For example, the input device 206 may be a mouse, a keyboard, a touchscreen device, a sensor device, or the like.

The communication apparatus 200 may be a general-purpose device or a dedicated device. In a specific implementation, the communication apparatus 200 may be a desktop computer, a portable computer, a network server, a PDA, a mobile phone, a tablet computer, a wireless terminal device, an embedded device, or a device having a structure similar to that in FIG. 2. A type of the communication apparatus 200 is not limited in embodiments of this application.

The following describes the technical solutions provided in embodiments of this application with reference to the accompanying drawings. It may be understood that in this application, an entity for executing the technical solutions may be the access network device 10, a chip in the access network device 10, the terminal device 20, or a chip in the terminal device 20 in FIG. 1. This is not limited herein. The following describes this solution by using an example in which a transmitting end is a first communication apparatus and a receiving end is a second communication apparatus. It may be understood that, the first communication apparatus may be the access network device 10, the chip in the access network device 10, the terminal device 20, or the chip in the terminal device 20 in FIG. 1, and the second communication apparatus may be the access network device 10, the chip in the access network device 10, the terminal device 20, or the chip in the terminal device 20 in FIG. 1. This is not limited herein. If the first communication apparatus is the access network device 10 or the chip in the access network device 10, the second communication apparatus is the terminal device 20 or the chip in the terminal device 20. If the first communication apparatus is the terminal device 20 or the chip in the terminal device 20, the second communication apparatus is the access network device 10 or the chip in the access network device 10.

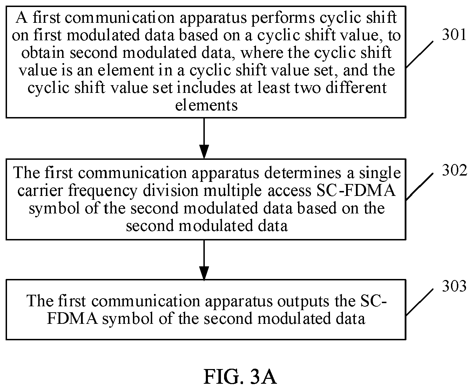

Refer to FIG. 3A. FIG. 3A is a schematic flowchart of a data transmission method according to an embodiment of this application. As shown in FIG. 3A, the method includes but is not limited to the following steps.

301: The first communication apparatus performs cyclic shift on first modulated data based on a cyclic shift value, to obtain second modulated data.

The cyclic shift value in step 301 is an element in a cyclic shift value set, and the cyclic shift value set includes at least two different elements.

In a possible implementation, the cyclic shift value in step 301 may include a first cyclic shift value and/or a second cyclic shift value, and the first cyclic shift value is different from the second cyclic shift value.

Optionally, the first cyclic shift value is an element in the cyclic shift value set, and the second cyclic shift value is an element in the cyclic shift value set.

In this application, the cyclic shift value set may be represented as $I_{cs}$. This is not limited herein.

Optionally, a quantity $N_{cs}$ of elements in the cyclic shift value set is a positive integer greater than 1. It may be understood that the cyclic shift value set is known to both the first communication apparatus and the second communication apparatus.

In a possible implementation, the first modulated data includes a real part of the first modulated data and an imaginary part of the first modulated data, and the second modulated data includes a real part of the second modulated data and an imaginary part of the second modulated data.

For example, the first modulated data may be represented as $d_1$, an $m^{th}$ element in the first modulated data may be represented as $d_1(m) = d_{real}(m) + d_{imag}(m) \cdot j$; or the $m^{th}$ element in the first modulated data may be represented as $d_1(m) = d_{real}(m) - d_{imag}(m) \cdot j$. $d_{real}$ is the real part of the first modulated data, $d_{real}(m)$ is an $m^{th}$ element of the real part of the first modulated data, $d_{imag} \cdot j$ is the imaginary part of the first modulated data, and $d_{imag}(m) \cdot j$ is an $m^{th}$ element of the imaginary part of the first modulated data. $d_{real}(m)$ may also be referred to as a real part of the $m^{th}$ element in the first modulated data, and $d_{imag}(m) \cdot j$ may also be referred to as an imaginary part of the $m^{th}$ element in the first modulated data. $j$ is an imaginary unit, $M$ is a length of the first modulated data, and m is an integer greater than or equal to 0 and less than or equal to $M$ - 1. $d_{real}(m)$ and $d_{imag}(m)$ are real numbers. It may be understood that the length of the first modulated data may be the quantity of elements included in the first modulated data.

It may be understood that in this application, the first modulated data may be quadrature phase shift keying (quadrature phase shift keying, QPSK) modulated data, 16 quadrature amplitude modulation (16 quadrature amplitude modulation, 16QAM) modulated data, 64QAM modulated data, or the like. This is not limited herein. In addition, the first modulated data may include modulated data corresponding to an original bit stream. The modulated data corresponding to the original bit stream may be obtained by sequentially performing processing such as coding, interleaving, scrambling, and modulation on the original bit stream, and the original bit stream may be obtained based on service data to be sent by the first communication apparatus. This is not limited herein.

In a possible implementation, step 301 may include: The first communication apparatus performs cyclic shift on the real part of the first modulated data based on the first cyclic shift value, to obtain the real part of the second modulated data, where the imaginary part of the second modulated data is the same as the imaginary part of the first modulated data; the first communication apparatus performs cyclic shift on the imaginary part of the first modulated data based on the second cyclic shift value, to obtain the imaginary part of the second modulated data, where the real part of the second modulated data is the same as the real part of the first modulated data; or the first communication apparatus performs cyclic shift on the real part of the first modulated data based on the first cyclic shift value, to obtain the real part of the second modulated data, and performs cyclic shift on the imaginary part of the first modulated data based on the second cyclic shift value, to obtain the imaginary part of the second modulated data.

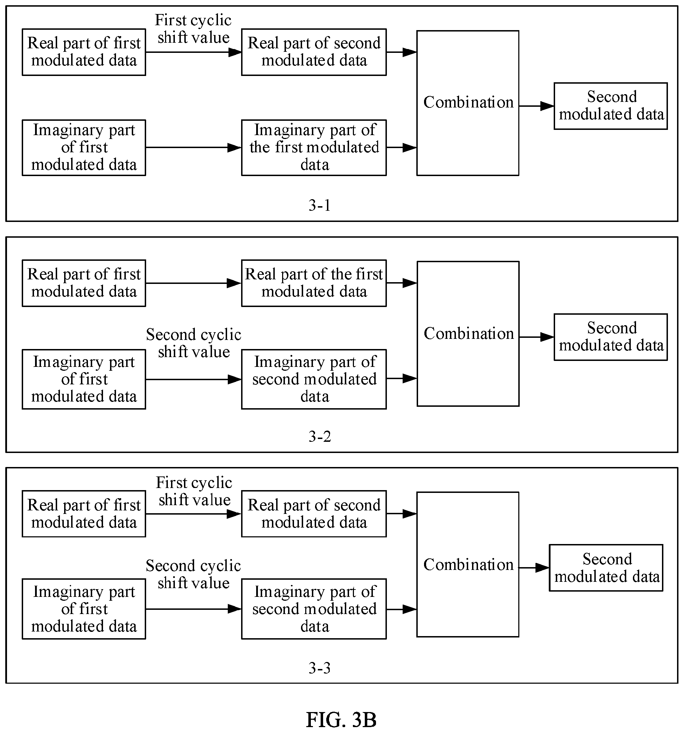

For example, refer to FIG. 3B. FIG. 3B is a schematic flowchart of another data transmission method according to an embodiment of this application. With reference to FIG. 3B, refer to 3-1 in FIG. 3B. The first communication apparatus only performs cyclic shift on the real part of the first modulated data based on the first cyclic shift value, to obtain the real part of the second modulated data, where the imaginary part of the second modulated data is the same as the imaginary part of the first modulated data, and may further combine the real part of the second modulated data and the imaginary part of the second modulated data, to obtain the second modulated data.

For example, the second modulated data may be represented as $d_2$, and an $m^{th}$ element in the second modulated data is represented as $d_2(m)$. The $m^{th}$ element in the second modulated data is represented as $d_2(m) = d_{real}[(m + \alpha_{cs,real})mod\ M]+d_{imag} \cdot j$; or the $m^{th}$ element in the second modulated data is represented as $d_2(m) = d_{real}[(m - \alpha_{cs,real})mod\ M]+d_{imag} \cdot j$.

$\alpha_{cs,real}$ is the first cyclic shift value, M is the length of the first modulated data, j is an imaginary unit, and m is an integer greater than or equal to 0 and less than or equal to $M - 1$. *mod* represents a modulo operation, for example, $3\ mod\ 5 = 3$, and $5\ mod\ 3 = 2$.

It can be learned that the second modulated data is obtained by performing cyclic shift, and the cyclic shift value is determined from the cyclic shift value set that includes at least two different elements. Therefore, a PAPR of an SC-FDMA symbol of the second modulated data is lower than a PAPR of an OFDM waveform, and is also lower than a PAPR of a conventional SC-FDMA symbol, to be specific, is lower than a PAPR of an SC-FDMA symbol obtained without the cyclic shift, so that a PAPR of a signal is further reduced. In addition, the first communication apparatus only performs cyclic shift on the real part of the first modulated data based on the first cyclic shift value, so that complexity of a generated SC-FDMA symbol is lower.

Refer to 3-2 in FIG. 3B. The first communication apparatus only performs cyclic shift on the imaginary part of the first modulated data based on the second cyclic shift value, to obtain the imaginary part of the second modulated data, where the real part of the second modulated data is the same as the real part of the first modulated data, and may further combine the real part of the second modulated data and the imaginary part of the second modulated data, to obtain the second modulated data.

For example, the $m^{th}$ element in the second modulated data is represented as $d_2(m) = d_{real}+d_{imag}[(m + \alpha_{cs,imag})mod\ M] \cdot j$; or the $m^{th}$ element in the second modulated data is represented as $d_2(m) = d_{real}+d_{imag}[(m - \alpha_{cs,imag})mod\ M] \cdot j$, where $\alpha_{cs,imag}$ is the second cyclic shift value.

It can be learned that the second modulated data is obtained by performing cyclic shift, and the cyclic shift value is determined from the cyclic shift value set that includes at least two different elements. Therefore, a PAPR of an SC-FDMA symbol of the second modulated data is lower than a PAPR of an OFDM waveform, and is also lower than a PAPR of a conventional SC-FDMA symbol, to be specific, is lower than a PAPR of an SC-FDMA symbol obtained without the cyclic shift, so that a PAPR of a signal is further reduced. In addition, the first communication apparatus only performs cyclic shift on the imaginary part of the first modulated data based on the second cyclic shift value, so that complexity of a generated SC-FDMA symbol is lower.

In 3-3 in FIG. 3B, the first communication apparatus performs cyclic shift on the real part of the first modulated data based on the first cyclic shift value, to obtain the real part of the second modulated data, performs cyclic shift on the imaginary part of the first modulated data based on the second cyclic shift value, to obtain the imaginary part of the second modulated data, and may further combine the real part of the second modulated data and the imaginary part of the second modulated data, to obtain the second modulated data.

For example, the $m^{th}$ element in the second modulated data is represented as $d_2(m) = d_{real}[(m + \alpha_{cs,real})mod\ M]+d_{imag}[(m + \alpha_{cs,imag})mod\ M] \cdot j$;

the $m^{th}$ element in the second modulated data is represented as $d_2(m) = d_{real}[(m - \alpha_{cs,real})mod\ M] + d_{imag}[(m + \alpha_{cs,imag})mod\ M] \cdot j$;

the $m^{th}$ element in the second modulated data is represented as $d_2(m) = d_{real}[(m + \alpha_{cs,real})mod\ M]+d_{imag}[(m - \alpha_{cs,imag})mod\ M] \cdot j$; or

the $m^{th}$ element in the second modulated data is represented as $d_2(m) = d_{real}[(m - \alpha_{cs,real})mod\ M] + d_{imag}[(m - \alpha_{cs,imag})mod\ M] \cdot j$.

It can be learned that the second modulated data is obtained by performing cyclic shift, and the cyclic shift value is determined from the cyclic shift value set that includes at least two different elements. Therefore, a PAPR of an SC-FDMA symbol of the second modulated data is lower than a PAPR of an OFDM waveform, and is also lower than a PAPR of a conventional SC-FDMA symbol, to be specific, is lower than a PAPR of an SC-FDMA symbol obtained without the cyclic shift, so that a PAPR of a signal is further reduced.

It may be understood that in this application, combination may be addition combination. This is not limited herein. It may be understood that in this application, the length of the first modulated data is the same as a length of the second modulated data.

In a possible implementation, the PAPR of the single carrier frequency division multiple access (single carrier frequency division multiple access, SC-FDMA) symbol of the second modulated data is lower than a PAPR of a corresponding SC-FDMA symbol obtained by performing cyclic shift on the first modulated data based on another element in the cyclic shift value set. In other words, the PAPR of the SC-FDMA symbol of the second modulated data is lower than PAPRs of corresponding SC-FDMA symbols obtained by performing cyclic shift on the first modulated data based on all other elements in the cyclic shift value set.

For example, the first communication apparatus may traverse all elements in the cyclic shift value set, and the first communication apparatus performs cyclic shift on the real part of the first modulated data based on each element, to obtain a real part of second modulated data corresponding to each element. An imaginary part of the second modulated data corresponding to each element is the same as the imaginary part of the first modulated data. Further, the second modulated data corresponding to each element may be obtained based on the real part of the second modulated data corresponding to each element and the imaginary part of the second modulated data corresponding to each element. Then, the first communication apparatus may obtain, based on the second modulated data corresponding to each element, an SC-FDMA symbol of the second modulated data corresponding to each element, determine, based on the SC-FDMA symbol of the second modulated data corresponding to each element, an SC-FDMA symbol with the lowest PAPR, and use an element corresponding to the SC-FDMA symbol with the lowest PAPR as the first cyclic shift value.

For another example, the first communication apparatus may traverse all elements in the cyclic shift value set, and the first communication apparatus performs cyclic shift on the imaginary part of the first modulated data based on each element, to obtain an imaginary part of the second modulated data corresponding to each element. A real part of the second modulated data corresponding to each element is the same as the real part of the first modulated data. Further, the second modulated data corresponding to each element may be obtained based on the real part of the second modulated data corresponding to each element and the imaginary part of the second modulated data corresponding to each element. Then, the first communication apparatus may obtain, based on the second modulated data corresponding to each element, an SC-FDMA symbol of the second modulated data corresponding to each element, determine, based on the SC-FDMA symbol of the second modulated data corresponding to each element, an SC-FDMA symbol with the lowest PAPR, and use an element corresponding to the SC-FDMA symbol with the lowest PAPR as the first cyclic shift value.

For example, $I_{cs}$ = {0,3,6,9,12,15,18,21}, and the second modulated data is obtained by performing cyclic shift on the first modulated data by using the 4th element (the cyclic shift value is 9) from left to right in $I_{cs}$ as the cyclic shift value. In this case, a PAPR of a corresponding SC-FDMA symbol after cyclic shift is performed on the first modulated data by nine positions is lower than PAPRs of corresponding SC-FDMA symbols after cyclic shift is performed on the first modulated data based on other elements in $I_{cs}$. The other elements herein are 0, 3, 6, 12, 15, 18, and 21.

In a possible implementation, the cyclic shift value in step 301 may correspond to at least two SC-FDMA symbols. To be specific, cyclic shift is performed on first modulated data corresponding to each of the at least two SC-FDMA symbols based on a same cyclic shift value. Further, overheads can be reduced when the cyclic shift value is subsequently indicated to the second communication apparatus. For example, cyclic shift is performed on the first modulated data corresponding to each of the at least two SC-FDMA symbols based on the first cyclic shift value; cyclic shift is performed on the first modulated data corresponding to each of the at least two SC-FDMA symbols based on the second cyclic shift value; or cyclic shift is performed on the first modulated data corresponding to each of the at least two SC-FDMA symbols based on the first cyclic shift value and the second cyclic shift value. It may be understood that the at least two SC-FDMA symbols may include the SC-FDMA symbol of the second modulated data.

For example, if a cyclic shift value of the at least two pieces of first modulated data corresponding to the at least two SC-FDMA symbols is the first cyclic shift value, a maximum value of PAPRs of the at least two SC-FDMA symbols corresponding to the first cyclic shift value is lower than a maximum value of PAPRs of at least two SC-FDMA symbols corresponding to all other elements in $I_{cs}$. It may be understood that the at least two SC-FDMA symbols corresponding to the first cyclic shift value include a corresponding SC-FDMA symbol (namely, the SC-FDMA symbol of the second modulated data) after cyclic shift is performed on the first modulated data of each SC-FDMA symbol in the at least two SC-FDMA symbols based on the first cyclic shift value. Similarly, if a cyclic shift value corresponding to the first modulated data and other modulated data is the second cyclic shift value, a maximum value of PAPRs of the at least two SC-FDMA symbols corresponding to the second cyclic shift value is lower than a maximum value of PAPRs of at least two SC-FDMA symbols corresponding to all other elements in $I_{cs}$.

302: The first communication apparatus determines the SC-FDMA symbol of the second modulated data based on the second modulated data.

Optionally, that the first communication apparatus determines the SC-FDMA symbol of the second modulated data based on the second modulated data may be implemented in any one of the following manners.

Manner 1.1: The first communication apparatus sequentially performs Fourier transform and inverse Fourier transform on the second modulated data to obtain the SC-FDMA symbol of the second modulated data. For example, the first communication apparatus performs Fourier transform on the second modulated data, to obtain frequency domain data; and the first communication apparatus performs inverse Fourier transform on the frequency domain data, to obtain the SC-FDMA symbol of the second modulated data. It may be understood that the SC-FDMA symbol of the second modulated data is time domain data.

Manner 1.2: The first communication apparatus sequentially performs Fourier transform, resource mapping, and inverse Fourier transform on the second modulated data to obtain the SC-FDMA symbol of the second modulated data.

In this application, the Fourier transform may be discrete Fourier transform (discrete Fourier transform, DFT), fast Fourier transform (fast Fourier transform, FFT), or another form of Fourier transform. For example, for a Fourier transform process, refer to section 6.3.1.4 in the protocol 3GPP TS 38.211 V15.8.0. This is not limited herein. The inverse Fourier transform may be inverse discrete Fourier transform (inverse discrete Fourier transform, IDFT), inverse fast Fourier transform (inverse fast Fourier transform, IFFT), or another form of inverse Fourier transform. For a process of the inverse Fourier transform, refer to section 5.3.1 in the protocol 3GPP TS 38.211 V15.8.0. This is not limited herein. For the resource mapping, refer to section 6.3.1.6 in the protocol 3GPP TS 38.211 V15.8.0. This is not limited herein.

For example, the manner 1.1 is used as an example, and a relationship between the frequency domain data $X$ and the second modulated data $d_2$ meets the following formula (1):

$$X(k) = \frac{1}{\sqrt{M}}\sum_{m=0}^{M-1} d_2(m) \times e^{-j\frac{2\pi mk}{M}} \quad (1).$$

$X(k)$ is an $m^{th}$ element of the frequency domain data $X$, and $k$ is an integer greater than or equal to 0 and less than or equal to $M$ - 1.

For another example, a relationship between the frequency domain data $X$ and the SC-FDMA symbol s of the second modulated data meets the following formula (2):

$$s(t) = \frac{1}{\sqrt{N_{scale}^{ifft}}}\sum_{k=k_{sc}^{start}}^{k_{sc}^{end}} X(k - k_{sc}^{start})e^{j2\pi\times\Delta f\times(k+k_{offset})\times(t+t_{offset})} \quad (2).$$

$s(t)$ is data of the SC-FDMA symbol s of the second modulated data at a $t^{th}$ moment, $t$ is a real number greater than or equal to $t_{start}$ and less than $t_{end}$, $t$, $t_{start}$, and $t_{end}$ are all real numbers, $t_{end}$ - $t_{start}$ = $(N + N_{CP}) \times T_s$, and duration of $s(t)$ is $(N + N_{CP}) \times T_s$. For example, $t_{start}$ = 0, and $t_{end}$ = $(N + N_{CP}) \times T_s$. $N$ is a positive integer, and N may be predefined, for example, N = 2048. $N_{CP} \times T_s$ is a time length of a cyclic prefix, and $N_{CP}$ may be predefined. $\Delta f$ is a subcarrier spacing, for example, $\Delta f = 1/(N \times T_s)$. $T_s$ is a time unit factor, and may be predefined or notified by the second communication apparatus to the first communication apparatus by using signaling. This is not limited herein. Optionally, $T_s$ is a time interval between two adjacent pieces of discrete data in discrete data obtained by performing discrete sampling on s(t). $t_{offset}$ is a delay offset, and $t_{offset}$ may be predefined, for example, $t_{offset}$ = -$(N_{CP} \times T_s)$; or $t_{offset}$ may be notified by the second communication apparatus to the first communication apparatus by using signaling. $N_{scale}^{ifft}$ is a coefficient used in the inverse Fourier transform to adjust output data power, and may be predefined, for example, $N_{scale}^{ifft} = 1$. $k_{offset}$ is a frequency domain offset factor, and may be predefined, for example, $k_{offset}$ = 1/2 or $k_{offset}$ = 0; or $k_{offset}$ may be notified by the second communication apparatus to the first communication apparatus by using signaling.

$k_{sc}^{start}$ is an index of a start position at which the frequency domain data X is mapped to a frequency domain resource, $k_{sc}^{end}$ is an index of an end position at which the frequency domain data X is mapped to the frequency domain resource, and $k_{sc}^{end} - k_{sc}^{start} = M - 1$. The index of the start position of the frequency domain resource may be a start position of a subcarrier corresponding to a bandwidth allocated to the first communication apparatus, and the index of the end position of the frequency domain resource may be an end position of the subcarrier corresponding to the bandwidth allocated to the first communication apparatus.

Optionally, when discrete sampling is performed on s(t) by using n $\times$ $T_s$, a discrete SC-FDMA symbol s($n \times T_s$) of the second modulated data including $N + N_{CP}$ elements may be obtained. $n$ is an integer greater than or equal to 0 and less than or equal to ($N + N_{CP}$) - 1. An example in which $k_{offset}$ = 0, $t_{offset}$ = 0, and $\Delta f$ = 1/($N \times T_s$) is used. In this case, the discrete SC-FDMA symbol of the second modulated data is represented as s($n \times T_s$) =

$$\frac{1}{\sqrt{N_{scale}^{ifft}}} \sum_{\mathrm{k}=k_{sc}^{start}}^{k_{sc}^{end}} X(k - k_{sc}^{start}) \mathrm{e}^{\mathrm{j}2\pi \times k \times n/N}$$

. It may be understood that first $N_{CP}$ pieces of discrete time domain data in the SC-FDMA symbol of the second modulated data may be considered as a cyclic prefix, and remaining $N$ pieces of discrete time domain data are a discrete SC-FDMA symbol obtained by removing the cyclic prefix. In other words, $N$ may be considered as a quantity of points of inverse discrete Fourier transform.

It may be understood that values of n and $s(n \times T_s)$ are in one-to-one correspondence, so that an $n^{th}$ element in the discrete SC-FDMA symbol of the second modulated data may also be represented as $s(n)$, where a value of $s(n)$ is consistent with a value of $s(n \times T_s)$.

303: The first communication apparatus outputs the SC-FDMA symbol of the second modulated data.

Optionally, step 303 may include: The first communication apparatus outputs the SC-FDMA symbol of the second modulated data to the second communication apparatus. The SC-FDMA symbol of the second modulated data may be used to send data or the like. This is not limited herein.

It can be learned that in the foregoing technical solution, the first communication apparatus may perform cyclic shift on the first modulated data based on the cyclic shift value in the cyclic shift value set that includes at least two different elements to obtain the second modulated data, and may further determine the SC-FDMA symbol of the second modulated data based on the second modulated data. Because the second modulated data is obtained by performing cyclic shift, and the cyclic shift value is determined from the cyclic shift value set that includes at least two different elements, the PAPR of the SC-FDMA symbol of the second modulated data is lower than the PAPR of the OFDM waveform, and is also lower than the PAPR of the conventional SC-FDMA symbol, to be specific, is lower than the PAPR of the SC-FDMA symbol obtained without the cyclic shift, so that the PAPR of a signal is further reduced. In addition, the SC-FDMA symbol that is of the second modulated data and has a low PAPR is output, so that demodulation performance is also improved.

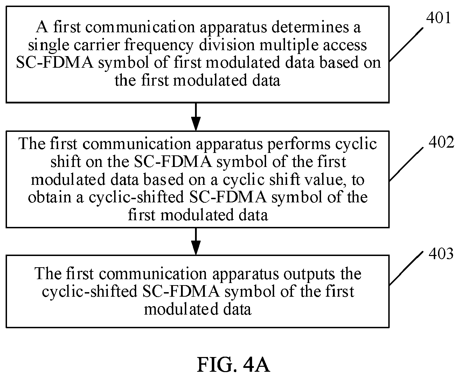

Refer to FIG. 4A. FIG. 4A is a schematic flowchart of still another data transmission method according to an embodiment of this application. As shown in FIG. 4A, the method includes but is not limited to the following steps.

401: The first communication apparatus determines an SC-FDMA symbol of first modulated data based on the first modulated data.

For the first modulated data, refer to related descriptions of step 301 in FIG. 3A. Details are not described herein again.

Optionally, the SC-FDMA symbol of the first modulated data includes an SC-FDMA symbol corresponding to a real part of the first modulated data and an SC-FDMA symbol corresponding to an imaginary part of the first modulated data.

Optionally, that the first communication apparatus determines the SC-FDMA symbol of the first modulated data based on the first modulated data may be implemented in any one of the following manners.

Manner 2.1: The first communication apparatus sequentially performs Fourier transform and inverse Fourier transform on the real part of the first modulated data to obtain the SC-FDMA symbol corresponding to the real part of the first modulated data; the first communication apparatus sequentially performs Fourier transform and inverse Fourier transform on the imaginary part of the first modulated data to obtain the SC-FDMA symbol corresponding to the imaginary part of the first modulated data; and the first communication apparatus combines the SC-FDMA symbol corresponding to the real part of the first modulated data and the SC-FDMA symbol corresponding to the imaginary part of the first modulated data to obtain the SC-FDMA symbol of the first modulated data. For example, the first communication apparatus performs Fourier transform on the real part of the first modulated data to obtain real part frequency domain data; the first communication apparatus performs inverse Fourier transform on the real part frequency domain data to obtain the SC-FDMA symbol corresponding to the real part of the first modulated data; the first communication apparatus performs Fourier transform on the imaginary part of the first modulated data to obtain imaginary part frequency domain data; the first communication apparatus performs inverse Fourier transform on the imaginary part frequency domain data to obtain the SC-FDMA symbol corresponding to the imaginary part of the first modulated data; and the first communication apparatus combines the SC-FDMA symbol corresponding to the real part of the first modulated data and the SC-FDMA symbol corresponding to the imaginary part of the first modulated data to obtain the SC-FDMA symbol of the first modulated data.

Manner 2.2: The first communication apparatus determines, based on the first modulated data, the SC-FDMA symbol corresponding to the real part of the first modulated data and the SC-FDMA symbol corresponding to the imaginary part of the first modulated data; and the first communication apparatus determines the SC-FDMA symbol of the first modulated data based on the SC-FDMA symbol corresponding to the real part of the first modulated data and the SC-FDMA symbol corresponding to the imaginary part of the first modulated data.

Manner 2.3: The first communication apparatus performs phase rotation on the first modulated data, to obtain first data; and the first communication apparatus determines the SC-FDMA symbol of the first modulated data based on the first data. For how the first communication apparatus determines the SC-FDMA symbol of the first modulated data based on the first data, refer to the manner 2.1. Details are not described herein again. It can be learned that the first communication apparatus performs phase rotation on the first modulated data, and adjusts a phase difference between the SC-FDMA symbol corresponding to the real part of the first modulated data and the SC-FDMA symbol corresponding to the imaginary part of the first modulated data, so that an amplitude of a maximum value of the SC-FDMA symbol of the first modulated data obtained through combination is reduced, that is, a probability of co-directional superposition is reduced, and a PAPR of a signal is further reduced.

For example, for the manner 2.1, a relationship between the real part frequency domain data $X_{real}$ and the real part $d_{real}$ of the first modulated data meets the following formula (3):

$$X_{real}(k) = \frac{1}{\sqrt{M}} \sum_{m=0}^{M-1} d_{real}(m) \times e^{-j\frac{2\pi mk}{M}} \quad (3).$$

$X_{real}(k)$ is an $m^{th}$ element of the real part frequency domain data $X_{real}$. For $d_{real}(m)$, $k$, and $M$, refer to the related descriptions of step 301 in FIG. 3A. Details are not described herein again.

For another example, for the manner 2.1, a relationship between the real part frequency domain data $X_{real}$ and the SC-FDMA symbol $s_{real}$ corresponding to the real part of the first modulated data meets the following formula (4):

$$s_{real}(t) = \frac{1}{\sqrt{N_{scale}^{ifft}}} \sum_{k=k_{sc}^{start}}^{k_{sc}^{end}} X_{real}(k - k_{sc}^{start}) e^{j2\pi \times \Delta f \times (k+k_{offset}) \times (t+t_{offset})} \quad (4).$$

For $t$, $N_{scale}^{ifft}$, $k_{sc}^{start}$, $k_{sc}^{end}$, $\Delta f$, $k_{offset}$, and $t_{offset}$, refer to related descriptions of step 302 in FIG. 3A. Details are not described herein again. $s_{real}(t)$ is data of the SC-FDMA symbol $s_{real}$ corresponding to the real part of the first modulated data at a $t^{th}$ moment.

It may be understood that, for the manner 2.1, a relationship between the imaginary part frequency domain data $X_{real}$ and the imaginary part $d_{imag} \cdot j$ of the first modulated data may be implemented with reference to the relationship between the real part frequency domain data $X_{real}$ and the real part $d_{real}$ of the first modulated data; and a relationship between the imaginary part frequency domain data $X_{imag}$ and the SC-FDMA symbol $s_{imag}$ corresponding to the imaginary part of the first modulated data may be implemented with reference to the relationship between the real part frequency domain data $X_{real}$ and the SC-FDMA symbol $s_{real}$ corresponding to the real part of the first modulated data.

Optionally, the first communication apparatus may determine, based on the first modulated data in the following implementation, the SC-FDMA symbol corresponding to the real part of the first modulated data and the SC-FDMA symbol corresponding to the imaginary part of the first modulated data.

Manner 3: The first communication apparatus sequentially performs Fourier transform and inverse Fourier transform on the first modulated data to obtain the SC-FDMA symbol corresponding to the first modulated data; the first communication apparatus performs data separation on the SC-FDMA symbol corresponding to the first modulated data, to obtain the SC-FDMA symbol corresponding to the real part of the first modulated data and the SC-FDMA symbol corresponding to the imaginary part of the first modulated data. For example, the first communication apparatus performs Fourier transform on the first modulated data to obtain frequency domain data; the first communication apparatus performs inverse Fourier transform on the frequency domain data, to obtain the SC-FDMA symbol corresponding to the first modulated data; and the first communication apparatus performs data separation on the SC-FDMA symbol corresponding to the first modulated data, to obtain the SC-FDMA symbol corresponding to the real part of the first modulated data and the SC-FDMA symbol corresponding to the imaginary part of the first modulated data.

For example, the first communication apparatus performs data separation on the SC-FDMA symbol corresponding to the first modulated data, to obtain the SC-FDMA symbol corresponding to the real part of the first modulated data and the SC-FDMA symbol corresponding to the imaginary part of the first modulated data. When represented in a form of continuous data, the SC-FDMA symbol corresponding to the real part of the first modulated data meets the following formula (5), and the SC-FDMA symbol corresponding to the imaginary part of the first modulated data meets the following formula (6):

$$s_{real}(t) = Re\{s(t) - \sum_{m=0}^{M-1} d_1(m)e^{j2\pi \times \Delta f \times (k_{1st}+k_{offset}) \times (t+t_{offset})}\} +$$

$$Re\{\sum_{m=0}^{M-1} d_1(m)\}e^{j2\pi \times \Delta f \times (k_{1st}+k_{offset}) \times (t+t_{offset})} \quad (5);$$

and

$$s_{imag}(t) = Im\{s(t) - \sum_{m=0}^{M-1} d_1(m)e^{j2\pi \times \Delta f \times (k_{1st}+k_{offset}) \times (t+t_{offset})}\} +$$

$$Im\{\sum_{m=0}^{M-1} d_1(m)\}e^{j2\pi \times \Delta f \times (k_{1st}+k_{offset}) \times (t+t_{offset})} \quad (6).$$

$s_{real}(t)$ is the data of the SC-FDMA symbol $s_{real}$ corresponding to the real part of the first modulated data at the $t^{th}$ moment, $s_{imag}(t)$ is data of the SC-FDMA symbol $s_{imag}$ corresponding to the imaginary part of the first modulated data at the $t^{th}$ moment, and s(t) is data of the SC-FDMA symbol s corresponding to the first modulated data at the $t^{th}$ moment.
For $d_1(m)$, refer to the related descriptions of step 301 in FIG. 3A. Details are not described herein again.
$k_{1st} = N - M/2$, and for $N$ and $M$, refer to the related descriptions of step 301 in FIG. 3A. Details are not described herein again.
Re{} represents obtaining a real part of data, and Im{} represents obtaining an imaginary part of data. For example, Re{1 + j} = 1, and Im{1 + j} = j.
For another example, the first communication apparatus performs data separation on the SC-FDMA symbol corresponding to the first modulated data, to obtain the SC-FDMA symbol corresponding to the real part of the first modulated data and the SC-FDMA symbol corresponding to the imaginary part of the first modulated data. When represented in a form of discrete data, the SC-FDMA symbol corresponding to the real part of the first modulated data meets the following formula (7), and the SC-FDMA symbol corresponding to the imaginary part of the first modulated data meets the following formula (8):

$$s_{real}(n) = Re\{s(n) - \sum_{m=0}^{M-1} d_1(m)e^{j\frac{2\pi \times n \times k_{1st}}{N}}\} + Re\{\sum_{m=0}^{M-1} d_1(m)\}e^{j\frac{2\pi \times n \times k_{1st}}{N}} \quad (7);$$

and

$$s_{imag}(n) = Im\{s(n) - \sum_{m=0}^{M-1} d_1(m)e^{j\frac{2\pi \times n \times k_{1st}}{N}}\} + Im\{\sum_{m=0}^{M-1} d_1(m)\}e^{j\frac{2\pi \times n \times k_{1st}}{N}} \quad (8).$$

$s_{real}(n)$ is an $n^{th}$ element of the SC-FDMA symbol corresponding to the real part of the first modulated data represented in the form of discrete data, and $s_{imag}(n)$ is an $n^{th}$ element of the SC-FDMA symbol corresponding to the imaginary part of the first modulated data represented in the form of discrete data.
For example, for the manner 2.3, the first communication apparatus performs phase rotation on the real part of the first modulated data, to obtain first data corresponding to the real part, and the first communication apparatus performs phase rotation on the imaginary part of the first modulated data, to obtain first data corresponding to the imaginary part. For how the first communication apparatus determines, based on the first data corresponding to the real part, the SC-FDMA symbol corresponding to the real part of the first modulated data, refer to content in which the first communication apparatus determines, based on the real part of the first modulated data, the SC-FDMA symbol corresponding to the real part of the first modulated data in the manner 2.1; and for how the first communication apparatus determines, based on the first data corresponding to the imaginary part, the SC-FDMA symbol corresponding to the imaginary part of the first modulated data, refer to content in which the first communication apparatus determines, based on the imaginary part of the first modulated data, the SC-FDMA symbol corresponding to the imaginary part of the first modulated data in the manner 2.1. Details are not described herein again.
For example, the first data corresponding to the real part may be represented as $d_{1shift,real}$, and the first data corresponding to the imaginary part may be represented as $d_{1shift,imag}$. An $m^{th}$ element in the first data corresponding to the real part is represented as $d_{1shift,real}(m) = d_{real}(m) \cdot e^{j2\pi \times \alpha_{cs,real} \times k_{1st}/N}$, and an $m^{th}$ element in the first data corresponding to the imaginary part is represented as $d_{1shift,imag}(m) = j \cdot d_{imag}(m) \cdot e^{j2\pi \times \alpha_{cs,imag} \times k_{1st}/N}$.

For $d_{real}$, $d_{imag} \cdot j$, $\alpha_{cs,real}$, $\alpha_{cs,imag}$, and the like, refer to related descriptions in FIG. 3A. Details are not described herein again. $e^{j2\pi \times \alpha_{cs,real} \times k_{1st}/N}$ may be a first phase factor, $e^{j2\pi \times \alpha_{cs,imag} \times k_{1st}/N}$ may be a second phase factor, and $k_{1st}$ = $N$ - $M/2$.

Optionally, in this application, the first phase factor is determined based on a first cyclic shift value, and the second phase factor is determined based on a second cyclic shift value. It may be understood that both the first phase factor and the second phase factor are constants. In addition, because the first phase factor is determined based on the first cyclic shift value, and the second phase factor is determined based on the second cyclic shift value, the first phase factor and the second phase factor do not need to be indicated, so that overheads are reduced. In addition, the amplitude of the maximum value of the cyclic-shifted SC-FDMA symbol of the first modulated data obtained through combination is reduced, that is, the probability of co-directional superposition is reduced, and the PAPR of a signal is further reduced. For example, when both pieces of data are 1, data obtained through addition is 2, and corresponding data energy is 4. When phases of the two pieces of data are adjusted so that a phase difference between the two pieces of data is 90 degrees (to be specific, one piece of data is 1, another piece of data is j, and data obtained through addition is 1+j), data energy corresponding to the data obtained through addition is 2. Therefore, the probability of co-directional superposition may be reduced through phase rotation, and the PAPR of a signal may be further reduced.

402: The first communication apparatus performs cyclic shift on the SC-FDMA symbol of the first modulated data based on a cyclic shift value, to obtain the cyclic-shifted SC-FDMA symbol of the first modulated data.

The cyclic shift value in step 402 is an element in a cyclic shift value set, and the cyclic shift value set includes at least two different elements. Optionally, the cyclic shift value in step 402 may include a first cyclic shift value and/or a second cyclic shift value, and the first cyclic shift value is different from the second cyclic shift value. It may be understood that the cyclic shift value set is known to both the first communication apparatus and the second communication apparatus.

Optionally, the first cyclic shift value is an element in the cyclic shift value set, and the second cyclic shift value is an element in the cyclic shift value set.

In a possible implementation, step 402 may include: The first communication apparatus performs, based on the first cyclic shift value, cyclic shift on the SC-FDMA symbol corresponding to the real part of the first modulated data, to obtain a first SC-FDMA symbol, and combines the first SC-FDMA symbol and the SC-FDMA symbol corresponding to the imaginary part of the first modulated data to obtain the cyclic-shifted SC-FDMA symbol of the first modulated data. It can be learned that the cyclic-shifted SC-FDMA symbol of the first modulated data is related to the cyclic shift value in the cyclic shift value set that includes at least two different elements. Therefore, a PAPR of the cyclic-shifted SC-FDMA symbol of the first modulated data is lower than a PAPR of an OFDM waveform, and is also lower than a PAPR of a conventional SC-FDMA symbol, to be specific, is lower than a PAPR of an SC-FDMA symbol obtained without the cyclic shift, so that a PAPR of a signal is further reduced. In addition, the first communication apparatus only performs, based on the first cyclic shift value, cyclic shift on the SC-FDMA symbol corresponding to the real part of the first modulated data, so that complexity of a generated SC-FDMA symbol is reduced.

In a possible implementation, step 402 may include: The first communication apparatus performs, based on the second cyclic shift value, cyclic shift on the SC-FDMA symbol corresponding to the imaginary part of the first modulated data, to obtain a second SC-FDMA symbol, and combines the SC-FDMA symbol corresponding to the real part of the first modulated data and the second SC-FDMA symbol to obtain the cyclic-shifted SC-FDMA symbol of the first modulated data. It can be learned that the cyclic-shifted SC-FDMA symbol of the first modulated data is related to the cyclic shift value in the cyclic shift value set that includes at least two different elements. Therefore, a PAPR of the cyclic-shifted SC-FDMA symbol of the first modulated data is lower than a PAPR of an OFDM waveform, and is also lower than a PAPR of a conventional SC-FDMA symbol, to be specific, is lower than a PAPR of an SC-FDMA symbol obtained without the cyclic shift, so that a PAPR of a signal is further reduced. In addition, the first communication apparatus only performs, based on the second cyclic shift value, cyclic shift on the SC-FDMA symbol corresponding to the imaginary part of the first modulated data, so that complexity of a generated SC-FDMA symbol is reduced.

In a possible implementation, step 402 may include: The first communication apparatus performs, based on the first cyclic shift value, cyclic shift on the SC-FDMA symbol corresponding to the real part of the first modulated data, to obtain the first SC-FDMA symbol; the first communication apparatus performs, based on the second cyclic shift value, cyclic shift on the SC-FDMA symbol corresponding to the imaginary part of the first modulated data, to obtain the second SC-FDMA symbol; and the first communication apparatus combines the first SC-FDMA symbol and the second SC-FDMA symbol to obtain the cyclic-shifted SC-FDMA symbol of the first modulated data. It can be learned that the SC-FDMA symbol of the first modulated data does not need to be regenerated for different cyclic shift values, so that calculation complexity is low, and implementation is easy. In addition, because the cyclic-shifted SC-FDMA symbol of the first modulated data is related to the cyclic shift value in the cyclic shift value set that includes at least two different elements, a PAPR of the cyclic-shifted SC-FDMA symbol of the first modulated data is lower than a PAPR of an OFDM waveform, and is also lower than a PAPR of a conventional SC-FDMA symbol, to be specific, is lower than a PAPR of an SC-FDMA symbol obtained without the cyclic shift, so that a PAPR of a signal is further reduced.

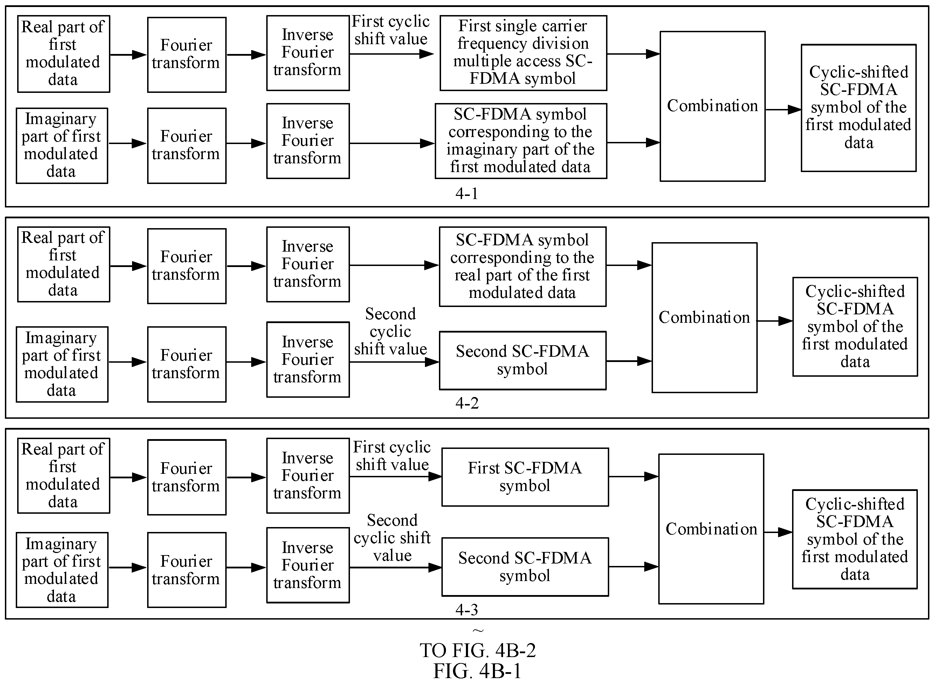

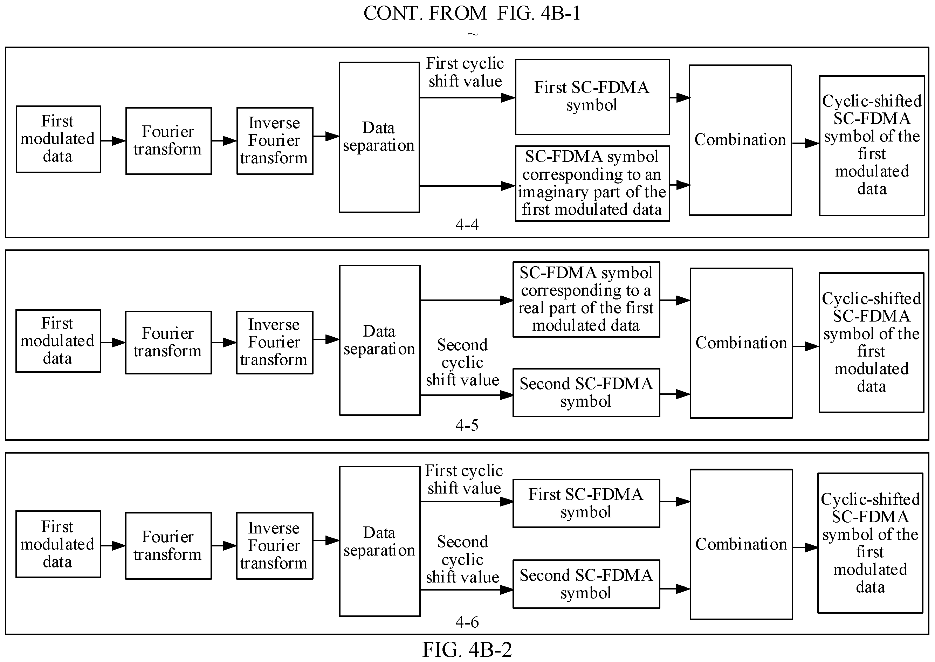

For example, refer to FIG. 4B-1 and FIG. 4B-2. FIG. 4B-1 and FIG. 4B-2 are a schematic flowchart of yet another data transmission method according to an embodiment of this application. With reference to 4-1 in FIG. 4B-1, 4-2 in FIG. 4B-1, and 4-3 in FIG. 4B-1, it can be learned that, the first communication apparatus sequentially performs Fourier transform and inverse Fourier transform on the real part of the first modulated data to obtain the SC-FDMA symbol corresponding to the real part of the first modulated data; and the first communication apparatus sequentially performs Fourier transform and inverse Fourier transform on the imaginary part of the first modulated data to obtain the SC-FDMA symbol corresponding to the imaginary part of the first modulated data. With reference to 4-4 in FIG. 4B-2, 4-5 in FIG. 4B-2, and 4-6 in FIG. 4B-2, it can be learned that, the first communication apparatus sequentially performs Fourier transform and inverse Fourier transform on the first modulated data to obtain the SC-FDMA symbol corresponding to the first modulated data; and the first communication apparatus performs data separation on the SC-FDMA symbol corresponding to the first modulated data to obtain the SC-FDMA symbol corresponding to the real part of the first modulated data and the SC-FDMA symbol corresponding to the imaginary part of the first modulated data.

After the inverse Fourier transform, with reference to 4-1 in FIG. 4B-1; or after the data separation, with reference to 4-4 in FIG. 4B-2, it can be learned that, the first communication apparatus only performs, based on the first cyclic shift value, cyclic shift on the SC-FDMA symbol corresponding to the real part of the first modulated data, to obtain the first SC-FDMA symbol, and may further combine the first SC-FDMA symbol and the SC-FDMA symbol corresponding to the imaginary part of the first modulated data to obtain the cyclic-shifted SC-FDMA symbol of the first modulated data.

After the inverse Fourier transform, with reference to 4-2 in FIG. 4B-1; or after the data separation, with reference to 4-5 in FIG. 4B-2, it can be learned that, the first communication apparatus only performs, based on the second cyclic shift value, cyclic shift on the SC-FDMA symbol corresponding to the imaginary part of the first modulated data, to obtain the second SC-FDMA symbol, and may further combine the SC-FDMA symbol corresponding to the real part of the first modulated data and the second SC-FDMA symbol to obtain the cyclic-shifted SC-FDMA symbol of the first modulated data.

After the inverse Fourier transform, with reference to 4-3 of FIG. 4B-1; or after the data separation, with reference to 4-6 in FIG. 4B-2, it can be learned that, the first communication apparatus performs, based on the first cyclic shift value, cyclic shift on the SC-FDMA symbol corresponding to the real part of the first modulated data, to obtain the first SC-FDMA symbol; and the first communication apparatus performs, based on the second cyclic shift value, cyclic shift on the SC-FDMA symbol corresponding to the imaginary part of the first modulated data, to obtain the second SC-FDMA symbol, and may further combine and the first SC-FDMA symbol and the second SC-FDMA symbol to obtain the cyclic-shifted SC-FDMA symbol of the first modulated data.

For example, a correspondence relationship between the first SC-FDMA symbol $s_{real,cs}$ and the first cyclic shift value $\alpha_{cs,real}$ meets the following formula (9) or formula (10):

$$s_{real,cs}(t) = s_{real}\left[\left(t - \alpha_{cs,real} \cdot T_s\right) mod \left(N \cdot T_s\right)\right] \quad (9);$$

or

$$s_{real,cs}(t) = s_{real}\left[\left(t + \alpha_{cs,real} \cdot T_s\right) mod \left(N \cdot T_s\right)\right] \quad (10).$$

$s_{real,cs}(t)$ is data of the first SC-FDMA symbol $s_{real,cs}$ at a $t^{th}$ moment, $s_{real}$ is the SC-FDMA symbol corresponding to the real part of the first modulated data, and for $t$, $N$ and $T_s$, refer to the related descriptions of step 302 in FIG. 3A. Details are not described herein again.

Optionally, when discrete sampling is performed on $s_{real,cs}(t)$ by using n × $T_s$, a discrete first SC-FDMA symbol $s_{real,cs}(n \times T_s)$ including $N + N_{CP}$ elements may be obtained. $n$ is an integer greater than or equal to 0 and less than or equal to $(N + N_{CP})$ - 1. It may be understood that, values of n and $s_{real,cs}(n \times T_s)$ are in one-to-one correspondence. Therefore, an $n^{th}$ element of the discrete first SC-FDMA symbol may also be represented as $s_{real,cs}(n)$, and a value of $s_{real,cs}(n)$ is consistent with a value of $s_{real,cs}(n \times T_s)$.

For example, $k_{offset}$ = 0, $t_{offset}$ = 0, and $\Delta f = 1/(N \times T_s)$ are used as an example. A correspondence relationship between the first SC-FDMA symbol $s_{real,cs}(n)$ represented in a discrete form and the first cyclic shift value $\alpha_{cs,real}$ meets the following formula (11) or formula (12):

$$s_{real,cs}(n) = s_{real}\left[\left(n - \alpha_{cs,real}\right) mod N\right] \quad (11);$$

or

$$s_{real,cs}(n) = s_{real}\left[\left(n + \alpha_{cs,real}\right) \bmod N\right] \quad (12).$$

It should be noted that, when the first communication apparatus performs, based on the first cyclic shift value, cyclic shift on the SC-FDMA symbol corresponding to the real part of the first modulated data, to obtain the first SC-FDMA symbol; and the first communication apparatus performs, based on the second cyclic shift value, cyclic shift on the SC-FDMA symbol corresponding to the imaginary part of the first modulated data to obtain the second SC-FDMA symbol, involved processing is similar, and a difference lies in that objects on which the first communication apparatus performs cyclic shift are different, and the second SC-FDMA symbol $s_{imag,cs}$ corresponds to the second cyclic shift value $\alpha_{cs,imag}$. Therefore, for how the first communication apparatus performs, based on the second cyclic shift value, cyclic shift on the SC-FDMA symbol corresponding to the imaginary part of the first modulated data, to obtain the second SC-FDMA symbol, refer to how the first communication apparatus performs, based on the first cyclic shift value, cyclic shift on the SC-FDMA symbol corresponding to the real part of the first modulated data, to obtain the first SC-FDMA symbol. Details are not described herein again.

In a possible implementation, the first communication apparatus may obtain, based on the first SC-FDMA symbol $s_{real,cs}$ and the second SC-FDMA symbol $s_{imag,cs}$, the cyclic-shifted SC-FDMA symbol $s_{cs}$ of the first modulated data. For example, the first SC-FDMA symbol $s_{real,cs}$ and the second SC-FDMA symbol $s_{imag,cs}$ can be added to obtain the cyclic-shifted SC-FDMA symbol $s_{cs}$ of the first modulated data.

For example, that the first SC-FDMA symbol $s_{real,cs}$ and the second SC-FDMA symbol $s_{imag,cs}$ are represented in a form of continuous data is used as an example. In this case, $s_{cs}(t) = s_{real,cs}(t) + s_{imag,cs}(t)$, where $s_{cs}(t)$ is data of the cyclic-shifted SC-FDMA symbol $s_{cs}$ of the first modulated data at the $t^{th}$ moment.

For example, that the first SC-FDMA symbol $s_{real,cs}$ and the second SC-FDMA symbol $s_{imag,cs}$ are represented in a form of discrete data is used as an example. In this case, $s_{cs}(n) = s_{real,cs}(n) + s_{imag,cs}(n)$, where $s_{cs}(n)$ is an $n^{th}$ element of a discrete cyclic-shifted SC-FDMA symbol of the first modulated data.

Optionally, the cyclic-shifted SC-FDMA symbol of the first modulated data is an SC-FDMA symbol obtained through phase rotation.

Optionally, the phase rotation may be implemented in any one of the following manners.

Manner 4.1: The SC-FDMA symbol corresponding to the real part of the first modulated data is an SC-FDMA symbol obtained by performing phase rotation based on the first phase factor; and/or the SC-FDMA symbol corresponding to the imaginary part of the first modulated data is an SC-FDMA symbol obtained by performing phase rotation based on the second phase factor.

Manner 4.2: The first SC-FDMA symbol is an SC-FDMA symbol obtained by performing phase rotation based on the first phase factor; and/or the second SC-FDMA symbol is an SC-FDMA symbol obtained by performing phase rotation based on the second phase factor.

It should be noted that in this application, if step 401 is implemented in the manner 2.1, $k_{1st}$ may be a position of the $1^{st}$ element in the real part frequency domain data $X_{real}$ and the imaginary part frequency domain data $X_{imag}$ in the frequency domain resource, and in other words, an index of a start position at which the real part frequency domain data $X_{real}$ and the imaginary part frequency domain data $X_{imag}$ are mapped to the frequency domain resource, that is,

$$k_{1st} = k_{sc}^{start}$$
. If step 401 is implemented in the manner 2.2, $k_{1st} = N - M/2$.

For example, if step 401 is implemented in the manner 2.1, that the first SC-FDMA symbol $s_{real,cs}$ and the second SC-FDMA symbol $s_{imag,cs}$ are represented in the form of continuous data is used as an example, and a first SC-FDMA symbol obtained by performing phase rotation on the first SC-FDMA symbol $s_{real,cs}$ is represented as $s_{real,shift}$. In this case, $s_{real,shift}(t) = s_{real,cs}(t) \times e^{j2\pi \times \alpha_{cs,real} \times k_{1st}/N}$. A second SC-FDMA symbol obtained by performing phase rotation on the second SC-FDMA symbol $s_{imag,cs}$ is represented as $s_{imag,shift}$. In this case, $s_{imag,shift}(t) = s_{imag,cs}(t) \times e^{j2\pi \times \alpha_{cs,imag} \times k_{1st}/N}$.

Optionally, the first communication apparatus may obtain the cyclic-shifted SC-FDMA symbol $s_{cs}$ of the first modulated data based on $s_{real,shift}$ and $s_{imag,shift}$. For example, $s_{real,shift}$ and $s_{imag,shift}$ may be added to obtain the cyclic-shifted SC-FDMA symbol $s_{cs}$ of the first modulated data.

For example, $s_{cs}(t) = S_{real,shift}(t) + s_{imag,shift}(t)$.

Optionally, the first communication apparatus may further perform phase rotation on the cyclic-shifted SC-FDMA symbol $s_{cs}$ of the first modulated data, to obtain an output symbol obtained through phase rotation, and the first communication apparatus may further output the output symbol obtained through phase rotation. The output symbol obtained through phase rotation is represented as $s_{shift}$.

For example, when represented in the form of continuous data, a relationship between $S_{shift}$ and $s_{cs}$ is

$$s_{shift}(t) = s_{cs}(t) \times e^{-j2\pi \times (k_{1st} - k_{sc}^{start}) \times \Delta f \times t}$$

.

For example, when represented in the form of discrete data, the relationship between $s_{shift}$ and $s_{cs}$ is

$$s_{shift}(n) = s_{cs}(n) \times e^{-j2\pi \times (k_{1st} - k_{sc}^{start}) \times \Delta f \times n}$$

.

403: The first communication apparatus outputs the cyclic-shifted SC-FDMA symbol of the first modulated data.

Optionally, step 403 may include: The first communication apparatus outputs the cyclic-shifted SC-FDMA symbol of the first modulated data to the second communication apparatus. Correspondingly, the second communication apparatus receives the cyclic-shifted SC-FDMA symbol of the first modulated data from the first communication apparatus.

It can be learned that in the foregoing technical solution, the first communication apparatus may determine the SC-FDMA symbol of the first modulated data based on the first modulated data, and may further perform cyclic shift on the SC-FDMA symbol of the first modulated data based on the cyclic shift value, to obtain the cyclic-shifted SC-FDMA symbol of the first modulated data. The SC-FDMA symbol is first determined and then cyclic shift is performed, so that additional calculation complexity is low, and implementation is easy. In addition, because the cyclic-shifted SC-FDMA symbol of the first modulated data is related to the cyclic shift value in the cyclic shift value set that includes at least two different elements, the PAPR of the cyclic-shifted SC-FDMA symbol of the first modulated data is lower than the PAPR of the OFDM waveform, and is also lower than the PAPR of the conventional SC-FDMA symbol, to be specific, is lower than the PAPR of the SC-FDMA symbol obtained without the cyclic shift, so that the PAPR of a signal is further reduced. In addition, the cyclic-shifted SC-FDMA symbol that is of the first modulated data and that has a low PAPR is output, so that demodulation performance is also improved.

In a possible implementation, the methods shown in FIG. 3A and FIG. 4A further include: The first communication apparatus outputs first information (for example, the first communication apparatus sends the first information to the second communication apparatus), and correspondingly, the second communication apparatus receives the first information (for example, the second communication apparatus receives the first information from the first communication apparatus). The first information indicates the cyclic shift value. To be specific, the first information indicates the first cyclic shift value and/or the second cyclic shift value.

Optionally, the first information indicates a first index and/or a second index, where the first index indicates the first cyclic shift value, and the second index indicates the second cyclic shift value. It may be understood that the first index is an index of the first cyclic shift value in the cyclic shift value set, and the second index is an index of the second cyclic shift value in the cyclic shift value set. For example, the first index is $i_{cs}$ in $i_{cs} \times \frac{M}{N_{cs}}$, $-i_{cs} \times \frac{M}{N_{cs}}$, $i_{cs} \times \frac{N}{N_{cs}}$, or $-i_{cs} \times \frac{N}{N_{cs}}$.

In a possible implementation, the first communication apparatus may perform cyclic shift on each piece of first modulated data in $L_{data}$ pieces of first modulated data, to obtain an SC-FDMA symbol corresponding to each piece of modulated data, and the first communication apparatus may send $L_{data}$ SC-FDMA symbols corresponding to the $L_{data}$ pieces of first modulated data. Cyclic shift values corresponding to $L_{step}$ consecutive pieces of first modulated data in the $L_{data}$ pieces of first modulated data may be the same or different. This is not limited herein. In other words, the cyclic shift values corresponding to $L_{step}$ SC-FDMA symbols of the $L_{step}$ consecutive pieces of first modulated data in the $L_{data}$ SC-FDMA symbols corresponding to the $L_{data}$ pieces of first modulated data may be the same or different. $L_{data}$ is a positive integer greater than or equal to 1, and $L_{step}$ is a positive integer. $L_{step}$ may be predefined, or may be indicated by second radio resource control (radio resource control, RRC) signaling. This is not limited herein. It may be understood that $L_{step}$ does not exceed $L_{data}$. When the second RRC signaling is sent by the first communication apparatus, the second RRC signaling may be, for example, uplink information transfer (uplink information transfer) signaling or other signaling. This is not limited herein. When the second RRC signaling is sent by the second communication apparatus, the second RRC signaling may be, for example, downlink information transfer (downlink information transfer) signaling or other signaling. This is not limited herein. It can be learned that, if the cyclic shift values corresponding to the $L_{step}$ consecutive pieces of first modulated data in the $L_{data}$ pieces of first modulated data are the same, a quantity of cyclic shift values indicated by the first information can be reduced, so that overheads are reduced. If the cyclic shift values corresponding to the $L_{step}$ consecutive pieces of first modulated data in the $L_{data}$ pieces of first modulated data are different, a PAPR of the SC-FDMA symbol of each piece of first modulated data may be low. When the cyclic-shifted SC-FDMA symbol that is of the first modulated data and that has a low PAPR is output, demodulation performance of a receiving end can be improved.

In a possible implementation, when $L_{step} = 1$, each of the $L_{data}$ pieces of first modulated data may correspond to a different cyclic shift value. For example, the first communication apparatus may perform cyclic shift on each piece of first modulated data based on all elements (to be specific, $N_{cs}$ cyclic shift values) in the cyclic shift value set, to obtain $N_{cs}$ SC-FDMA symbols corresponding to each piece of first modulated data. The first communication apparatus may select, from the $N_{cs}$ SC-FDMA symbols corresponding to each piece of first modulated data, a cyclic shift value corresponding to a symbol with the lowest PAPR as the cyclic shift value corresponding to each piece of first modulated data. It may be understood that the $L_{data}$ SC-FDMA symbols corresponding to the $L_{data}$ pieces of first modulated data have $N_{cs} \times L_{data}$ possible cyclic shift values in total.

In addition, the first communication apparatus may send the first modulated data and a reference signal by using a plurality of symbols. For example, refer to FIG. 5. FIG. 5 is a schematic diagram of a symbol used to transmit first modulated data and a reference signal according to an embodiment of this application. As shown in 5-1 in FIG. 5, the first communication apparatus sends seven symbols, where two symbols are used to send a reference signal, and five symbols are used to send first modulated data. It is assumed that $N_{cs}$ = 8, so that the five symbols used to send the first modulated data have 40 possible cyclic shift values. A symbol including the reference signal may be an OFDM symbol or an SC-FDMA symbol. This is not limited in this application. A symbol used to send the first modulated data is an SC-FDMA symbol.

In another possible implementation, in $L_{data}$ SC-FDMA symbols corresponding to $L_{data}$ pieces of first modulated data, starting from the SC-FDMA symbol corresponding to the start first modulated data, cyclic shift values used by $L_{step}$ SC-FDMA symbols corresponding to every $L_{step}$ pieces of first modulated data may be the same. It may be understood that, the $L_{data}$ SC-FDMA symbols corresponding to the $L_{data}$ pieces of first modulated data have $N_{cs} \times \lceil L_{data}/L_{step} \rceil$ possible cyclic shift values in total, and correspond to $N_{cs} \times \lceil L_{data}/L_{step} \rceil$ indexes. When $L_{step}$ is greater than 1, as shown in 5-2 in FIG. 5, the first communication apparatus sends seven symbols, where two symbols are used to send a reference signal, and five symbols are used to send first modulated data. It is assumed that $N_{cs}$ = 8. The $0^{th}$ symbol and the $1^{st}$ symbol in the five symbols corresponding to the first modulated data use a same cyclic shift value, the $2^{nd}$ symbol and the $3^{rd}$ symbol use a same cyclic shift value, and the last SC-FDMA symbol independently uses a cyclic shift value corresponding to the symbol. The five symbols have 24 possible cyclic shift values.

Optionally, the first modulated data further includes modulated data obtained by modulating first information, and the first information indicates a cyclic shift value. In other words, the first modulated data includes modulated data obtained based on an original bit stream and the modulated data obtained by modulating the first information. The modulated data obtained by modulating the first information may be a complex number, a real number, or an imaginary number. This is not limited herein. If the modulated data obtained by modulating the first information is a real number, the modulated data obtained by modulating the first information may be in a real part of the first modulated data; or if the modulated data obtained by modulating the first information is an imaginary number, the modulated data obtained by modulating the first information may be in an imaginary part of the first modulated data. It can be learned that in the foregoing technical solution, the first modulated data further includes modulated data obtained by modulating the first information, and in other words, the cyclic shift value is explicitly indicated.

Optionally, the first modulated data further includes a first sequence, and the first sequence corresponds to the cyclic shift value. In other words, the first modulated data includes the modulated data obtained based on the original bit stream and the first sequence. The first sequence may be a complex number, a real number, or an imaginary number. This is not limited herein. If the first sequence is a real number, the first sequence may be in a real part of the first modulated data; or if the first sequence is the imaginary number, the first sequence may be in the imaginary part of the first modulated data. It can be learned that in the foregoing technical solution, the first modulated data further includes the first sequence, and in other words, the cyclic shift value is implicitly implemented.

For example, consecutive $L_{step}$ pieces of first modulated data use $N_{cs}$ cyclic shift values, correspond to $N_{cs}$ indexes, and may use $\lceil \log_2 N_{cs} \rceil$ bits of bit data for indication. It may be understood that the $L_{data}$ SC-FDMA symbols corresponding to the $L_{data}$ pieces of first modulated data need to be indicated by $\lceil \log_2 N_{cs} \rceil \times \lceil L_{data}/L_{step} \rceil$ bits in total.

For another example, a length of the modulated data obtained by modulating the first information is $M_{bit}$, and a length of the modulated data obtained based on the original bit stream is $M_{data}$. In this case, a length of the first modulated data is $M = M_{data} + M_{bit}$, where $M_{bit}$ and $M_{data}$ are positive integers. $M_{bit}$ may be predefined or indicated by third RRC signaling. The second communication apparatus sends the third RRC signaling to the first communication apparatus, and correspondingly, the first communication apparatus receives the third RRC signaling. $M_{data}$ may be determined based on $M_{bit}$ and a quantity $P$ of subcarriers corresponding to a bandwidth allocated to the first communication apparatus. The third RRC signaling is sent by the first communication apparatus. For example, the third RRC signaling may be uplink information transfer (uplink information transfer) signaling or other signaling. This is not limited herein. The third RRC signaling is sent by the second communication apparatus. For example, the third RRC signaling may be downlink information transfer (downlink information transfer) signaling or other signaling. This is not limited herein.

Optionally, the modulated data obtained by modulating the first information is predefined at a position of the first modulated data or indicated by RRC signaling. For example, the modulated data obtained by modulating the first information may be predefined as start $M_{bit}$ elements in the first modulated data.

Optionally, the modulated data obtained by modulating the first information may be sent in all or some SC-FDMA symbols of the $L_{data}$ SC-FDMA symbols corresponding to the $L_{data}$ pieces of first modulated data. For example, modulated data corresponding to the first information may be sent in $L_{bit}$ SC-FDMA symbols of the $L_{data}$ SC-FDMA symbols corresponding to $L_{data}$ pieces of first modulated data, where $L_{bit}$ is an integer less than or equal to $L_{data}$. $L_{bit}$ may be predefined or indicated by the RRC signaling. Positions of the $L_{bit}$ SC-FDMA symbols in the SC-FDMA symbols corresponding to the $L_{data}$ pieces of first modulated data may be predefined or indicated by the RRC signaling.

Optionally, the modulated data obtained by modulating the first information may be repeatedly sent in the $L_{bit}$ SC-FDMA symbols, or the modulated data obtained by modulating the first information is divided into $L_{bit}$ blocks of data, where the $L_{bit}$ blocks of data and the $L_{bit}$ SC-FDMA symbols are in one-to-one correspondence. For example, when $L_{bit}$ = 1, it may be predefined that the modulated data corresponding to the first information is sent in the 1st SC-FDMA symbol of the $L_{data}$ SC-FDMA symbols corresponding to the $L_{data}$ pieces of modulated data.

Optionally, the modulated data obtained by modulating the first information may be QPSK data, 16QAM modulated data, 64QAM modulated data, or the like. This is not limited herein. If the modulated data obtained by modulating the first information is QPSK data, phase rotation may be performed on $M_{part}$ pieces of data in the first modulated data of which the length is M based on a third phase rotation factor, to implicitly indicate a first cyclic shift value and/or a second cyclic shift value indicated by the first information. The third phase rotation factor may be $e^{j\pi/4}$ or $e^{-j\pi/4}$. For example, the $M_{part}$ pieces of data in the first modulated data of which the length is M are multiplied by $e^{j\pi/4}$ or $e^{-j\pi/4}$. $M_{part}$ is a positive integer less than M. Positions of the $M_{part}$ pieces of data in the first modulated data of which the length is M may be predefined or indicated by the RRC signaling. This is not limited herein.

It may be understood that a real part or an imaginary part of data obtained by multiplying the QPSK data by the third phase rotation factor is 0. Therefore, real parts of some pieces of output data in $M_{part}$ pieces of output data obtained by multiplying the $M_{part}$ pieces of data by the third phase rotation factor are 0, imaginary parts of the some pieces of output data are 0, and neither real parts nor imaginary parts of remaining $M - M_{part}$ pieces of QPSK data are 0. After cyclic shift is performed, a real part or an imaginary part of the $M_{part}$ pieces of data, or the real part and the imaginary part of the $M_{part}$ pieces of data are shifted to different positions. The second communication apparatus may determine the first cyclic shift value and/or the second cyclic shift value indicated by the first information by detecting a position of the real part of the $M_{part}$ pieces of data, a position of the imaginary part of the $M_{part}$ pieces of data, or the position of the real part and the position of the imaginary part of the $M_{part}$ pieces of data.

Optionally, the $L_{data}$ SC-FDMA symbols corresponding to the $L_{data}$ pieces of first modulated data have $N_{cs} \times \left\lceil L_{data}/L_{step} \right\rceil$ possible cyclic shift values in total. The first communication apparatus may determine a first sequence set, and the first sequence set includes $N_{cs} \times \left\lceil L_{data}/L_{step} \right\rceil$ first sequences. The $N_{cs} \times \left\lceil L_{data}/L_{step} \right\rceil$ possible cyclic shift values and $N_{cs} \times \left\lceil L_{data}/L_{step} \right\rceil$ first sequences are in one-to-one correspondence. The first sequence set may be predefined or indicated by the RRC signaling. The first sequence may be modulated data generated based on a pseudo-random sequence, or a Zadoff-Chu sequence, or a sequence corresponding to each row in a Fourier transform matrix, or a sequence corresponding to some rows in the Fourier transform matrix. This is not limited herein. In addition, for a length of the first sequence, refer to the length of the modulated data obtained by modulating the first information; and for a position of the first sequence in the first modulated data, refer to the position of the modulated data obtained by modulating the first information in the first modulated data. Details are not described herein again. It may be understood that the first sequence may be sent in $L_{bit}$ SC-FDMA symbols of the $L_{data}$ SC-FDMA symbols.

Optionally, the first cyclic shift value and/or the second cyclic shift value indicated by the first information, or a first index and/or a second index indicated by the first information may correspond to a position and/or a sequence of a phase tracking reference signal (phase tracking reference signal, PTRS). For example, the first index corresponds to the position of the PTRS; the first index corresponds to the PTRS sequence; or the first index corresponds to the position of the PTRS and the PTRS sequence.

For example, $N_{cs}$ positions of the PTRS may be predefined or indicated by the RRC signaling, and the first communication apparatus selects one position from the $N_{cs}$ positions of the PTRS to map the PTRS sequence. The second communication apparatus may determine the first cyclic shift value by detecting the position of the PTRS. It may be understood that the PTRS sequence is included in the first modulated data. It may be understood that the $N_{cs}$ positions of the PTRS may be $N_{cs}$ start positions, and one start position may be selected from the $N_{cs}$ start positions by the PTRS sequence, to map the PTRS sequence from the start position.

Optionally, the first cyclic shift value and/or the second cyclic shift value indicated by the first information, or the first index and/or the second index indicated by the first information may be carried in the reference signal. For example, the first communication apparatus performs cyclic shift on the reference signal, and a cyclic shift value obtained when cyclic shift is performed on the reference signal corresponds to the first cyclic shift value and/or the second cyclic shift value. The second communication apparatus may determine the first cyclic shift value and/or the second cyclic shift value indicated by the first information by detecting the cyclic shift value corresponding to the reference signal. All possible values of the cyclic shift value corresponding to the reference signal may be predefined or indicated by the RRC signaling.

For example, with reference to 5-1 in FIG. 5, the first communication apparatus sends seven symbols, and corresponding indexes are 0 to 6, where two symbols are used to send the reference signal, and corresponding indexes are 0 and 4; and five symbols are used to send the first modulated data, and corresponding indexes are 1, 2, 3, 5, and 6. It may be predefined or indicated by the RRC signaling that symbols of which indexes are 1, 2, and 3 may use a same cyclic shift value, and a symbol 5 and a symbol 6 may use a same cyclic shift value. It is assumed that $N_{cs} = 8$, so that cyclic shift values corresponding to eight reference signals may be used, and eight possible cyclic shift values of the $0^{th}$ symbol in which the reference signal is located correspond to eight possible cyclic shift values of symbols 1, 2, and 3 in which the modulated data is located; and eight possible cyclic shift values of the $4^{th}$ symbol in which the reference signal is located correspond to eight possible cyclic shift values of a symbol 5 and a symbol 6 in which the modulated data is located.

The reference signal may be used to assist the second communication apparatus in performing channel estimation and equalization to demodulate data.

It can be learned that in the foregoing technical solution, through outputting the first information, the second communication apparatus can know the cyclic shift value used when the first communication apparatus performs cyclic shift, so that a probability that the second communication apparatus detects and obtains an incorrect cyclic shift value is reduced, and demodulation performance is improved. In addition, in a possible implementation, the first cyclic shift value and/or the second cyclic shift value indicated by the first information, or the first index and/or the second index indicated by the first information may correspond to the position and/or the sequence of the PTRS. In another possible implementation, the first cyclic shift value and/or the second cyclic shift value indicated by the first information, or the first index and/or the second index indicated by the first information may be carried in the reference signal. In other words, in both of the two possible implementations, the cyclic shift value is implicitly indicated.

In a possible implementation, a quantity $N_{cs}$ of elements in a cyclic shift value set is indicated by first RRC signaling, a quantity $N_{cs}$ of elements in a cyclic shift value set is related to a value indicated by first RRC signaling, or a quantity $N_{cs}$ of elements in a cyclic shift value set may be predefined. The quantity $N_{cs}$ of elements in the cyclic shift value set may be a subset or a full set of {2, 4, 6, 8, 12, 16}. This is not limited herein. The first RRC signaling is sent by the first communication apparatus. For example, the first RRC signaling may be uplink information transfer (uplink information transfer) signaling or other signaling. This is not limited herein. The first RRC signaling is sent by the second communication apparatus. For example, the first RRC signaling may be downlink information transfer (downlink information transfer) signaling or other signaling. This is not limited herein.

For example, if $N_{cs}$ is 4 or 8, and there are two possible values in total, $N_{cs}$ may be indicated by 1-bit first RRC signaling; if $N_{cs}$ is 4, 6, 8, or 12, and there are four possible values in total, $N_{cs}$ may be indicated by 2-bit first RRC signaling; and if $N_{cs}$ is 2, 4, 6, 8, 12, or 16, and there are six possible values in total, $N_{cs}$ may be indicated by 3-bit first RRC signaling.

For another example, $N_{cs}$ may be the same as the length M of the first modulated data.

Optionally, values of elements in the cyclic shift value set are determined based on the quantity of elements in the cyclic shift value set.

In a possible implementation, the quantity $N_{cs}$ of elements in the cyclic shift value set is related to the quantity P of subcarriers corresponding to the bandwidth allocated to the first communication apparatus.

Optionally, the quantity $N_{cs}$ of elements in the cyclic shift value set is the same as the quantity P of subcarriers corresponding to the bandwidth allocated to the first communication apparatus.

Optionally, the quantity of subcarriers corresponding to the bandwidth allocated to the first communication apparatus is the same as the length of the first modulated data and a length of second modulated data.

In a possible implementation, the quantity of elements in the cyclic shift value set is related to the quantity P of subcarriers corresponding to the bandwidth allocated to the first communication apparatus and the value indicated by the first RRC signaling. For example, the quantity P of subcarriers corresponding to the bandwidth allocated to the first communication apparatus may be exactly divided by the quantity $N_{cs}$ of elements in the cyclic shift value set, and $N_{cs}$ is a maximum value of values that do not exceed the value indicated by the first RRC signaling.

For example, if P is 36, and a value indicated by 2-bit first RRC signaling is 8, the first communication apparatus may determine, from 4, 6, 8, and 12, that 4, 6, and 8 do not exceed 8, and that 4 and 6 can be exactly divided by 36, where the maximum value is 6. In other words, the quantity $N_{cs}$ of elements in the cyclic shift value set is 6.

In a possible implementation, the quantity $N_{cs}$ of elements in the cyclic shift value set is related to a quantity $N$ of points of discrete Fourier transform.

Optionally, the quantity $N$ of points of the discrete Fourier transform may be exactly divided by the quantity $N_{cs}$ of elements in the cyclic shift value set, and $N_{cs}$ is a maximum value of values that do not exceed the value indicated by the first RRC signaling.

Optionally, the quantity $N_{cs}$ of elements in the cyclic shift value set is related to the quantity $P$ of subcarriers corresponding to the bandwidth allocated to the first communication apparatus and a quantity $N$ of points of discrete Fourier transform.

Optionally, the quantity $P$ of subcarriers corresponding to the bandwidth allocated to the first communication apparatus may be exactly divided by the quantity $N_{cs}$ of elements in the cyclic shift value set, and the quantity $N$ of points of discrete Fourier transform may be exactly divided by the quantity $N_{cs}$ of elements in the cyclic shift value set. For example, $N_{cs}$ may be a common divisor of $P$ and $N$. For example, $N_{cs}$ may be a maximum common divisor of P and N.

For example, if a maximum common divisor of P = 12, N = 2048, P, and N is 4, $N_{cs}$ may be 4.

Optionally, a value of an $i_{cs}$th element in the cyclic shift value set is $i_{cs}$.

Optionally, the value of the $i_{cs}$th element in the cyclic shift value set is $i_{cs} \times \frac{M}{N_{cs}}$, $-i_{cs} \times \frac{M}{N_{cs}}$, $i_{cs} \times \frac{N}{N_{cs}}$ or $-i_{cs} \times \frac{N}{N_{cs}}$, $i_{cs}$ is an integer greater than or equal to 0 and less than or equal to $N_{cs}$ - 1, $N_{cs}$ is the quantity of elements in the cyclic shift value set, M is the length of the first modulated data, and $N$ is the quantity of points of the discrete Fourier transform. It may be understood that, by using $i_{cs} \times \frac{M}{N_{cs}}$, $-i_{cs} \times \frac{M}{N_{cs}}$, $i_{cs} \times \frac{N}{N_{cs}}$ or $-i_{cs} \times \frac{N}{N_{cs}}$, the values of the elements in the cyclic shift value set do not need to be indicated, so that overheads are reduced, and complexity of a generated SC-FDMA symbol is also low. It may be understood that, the element in the cyclic shift value set is determined by using the foregoing formula, so that in step 402, the first communication apparatus performs cyclic shift on the SC-FDMA symbol of the first modulated data based on the cyclic shift value, to obtain the cyclic-shifted SC-FDMA symbol of the first modulated data; and in step 301, the first communication apparatus performs cyclic shift on the first modulated data based on the cyclic shift value, to obtain the second modulated data. The two operations are equivalent. In other words, when the element in the cyclic shift value set is determined by using the foregoing formula, the PAPR of the solution in FIG. 3A is the same as the PAPR of the solution in FIG. 4A, and the solution in FIG. 3A may be equivalently implemented by using the solution in FIG. 4A.

For example, if $M$ =24, and $N_{cs}$ = 4, $I_{cs}$ = {0,6,12,18} or$I_{cs}$ = {0, -6, -12, -18}; if $M$ = 24, and $N_{cs}$ = 8 , $I_{cs}$ = {0,3,6,9,12,15,18,21} or $I_{cs}$ = {0, -3, -6, -9, -12, -15, -18, -21}; if $N$ = 2048, and $N_{cs}$ = 4, $I_{cs}$ = {0, 512,1024, 1536}; and if $N$ = 2048, and $N_{cs}$ = 8, $I_{cs}$ = {0, 256, 512, 768, 1024, 1280, 1536, 1792}. It may be understood that a sequence of the elements in the cyclic shift value set $I_{cs}$ may be arbitrary.

In a possible implementation, the first modulated data further includes at least one group of PTRSs, and to be specific, the first modulated data includes the modulated data obtained based on the original bit stream and the at least one group of PTRSs. A quantity of groups of PTRSs is determined based on the quantity of elements in the cyclic shift value set, and each group of PTRSs in the at least one group of PTRSs includes at least one PTRS sequence.

Optionally, a PTRS sequence included in each group of PTRSs in the at least one group of PTRSs may be a real number, an imaginary number, or a complex number.

Optionally, each group of PTRSs in the at least one group of PTRSs includes a same PTRS sequence. For example, if the PTRS sequence included in each group of PTRSs in the at least one group of PTRSs is a complex number, each group of PTRSs in the at least one group of PTRSs includes a same sequence.

For example, the first modulated data includes $N_{group}$ groups of PTRSs, each group of PTRSs in the $N_{group}$ groups of PTRSs includes one PTRS sequence, and the PTRS sequence may include $M_{ptrs}^{group}$ values. That is, a total length of the PTRS sequence included in the first modulated data may be $M_{ptrs} = M_{ptrs}^{group} \times N_{group}$. In a possible implementation, the first modulated data includes the modulated data obtained based on the original bit stream and the $N_{group}$ group of PTRSs, that is, the length of the first modulated data is $M = M_{data} + M_{ptrs}$. $M_{data}$ is the length of the modulated data obtained based on the original bit stream, and $M_{ptrs}$ is the total length of the PTRS sequence included in the first modulated data. In another possible implementation, the first modulated data includes the modulated data obtained based on the original bit stream, the modulated data obtained by modulating the first information, and the $N_{group}$ groups of PTRSs, that is, the length of the first modulated data is $M = M_{data} + M_{ptrs} + M_{bit}$. $M_{data}$ is the length of the modulated data obtained based on the original bit stream, $M_{ptrs}$ is the total length of the PTRS sequence included in the first modulated data, and $M_{bit}$ is the length of the modulated data obtained by modulating the first information. Secondly, the quantity of groups of PTRSs is determined based on the quantity of elements in the cyclic shift value set and $K_{group}$.

For example, $$\frac{N_{group}}{N_{cs}} = K_{group}$$, $K_{group}$ is a positive integer, and $K_{group}$ may be predefined or indicated by the RRC signaling. This is not limited herein. It may be understood that, if $K_{group} = 1$, the quantity of groups of PTRSs is the same as the quantity of elements in the cyclic shift value set. In addition, in a possible implementation, the first modulated data may be evenly divided into $N_{cs}$ sub-blocks of data, each sub-block includes $M/N_{cs}$ elements, and the $N_{group}$ groups of PTRSs may be evenly distributed in the $N_{cs}$ sub-blocks, that is, each sub-block includes $K_{group}$ groups of PTRSs, where relative positions of the $K_{group}$ groups of PTRSs in each sub-block are the same in each sub-block.

For example, refer to FIG. 6. FIG. 6 is a schematic diagram of dividing first modulated data into four sub-blocks according to an embodiment of this application. With reference to 6-1 in FIG. 6 and 6-2in FIG. 6, it can be learned that, $N_{cs}$ is 4, the first modulated data is divided into four sub-blocks, and the four sub-blocks correspond to a sub-block 1 to a sub-block 4. In 6-1 in FIG. 6, each sub-block includes one group of PTRSs, and relative positions of the one group of PTRSs included in each sub-block are the same in each sub-block, and in other words, positions of the one group of PTRSs included in each sub-block relative to the 1st element in each sub-block are the same. In 6-2 in FIG. 6, each sub-block includes two groups of PTRSs, and positions of the 1st group of PTRSs (the 1st group of PTRSs in the two groups of PTRSs included in each sub-block from left to right) in the two groups of PTRSs included in each sub-block relative to the 1st element in each sub-block are the same, and positions of the 2nd group of PTRSs (the 2nd group of PTRSs in the two groups of PTRSs included in each sub-block from left to right) in the two groups of PTRSs included in each sub-block relative to the 1st element in each sub-block are the same. It may be understood that, 3-1 in FIG. 3B in which the first communication apparatus only performs cyclic shift on the real part of the first modulated data based on the first cyclic shift value is used as an example. When a PTRS sequence included in each group of PTRSs in at least one group of PTRSs is an imaginary number, the PTRS sequence is included in the imaginary part of the first modulated data. In addition, when $K_{group}$ groups of PTRSs in each subblock have a same relative position in each sub-block, cyclic shift is performed on the real part of the first modulated data, and a PTRS sequence in any sub-block is not interfered by modulated data corresponding to an original bit stream, and is not interfered by a PTRS sequence in another sub-block, so that the second communication apparatus can estimate phase noise (phase noise) by using the PTRS sequence, and demodulation performance is improved. 3-2 in FIG. 3B in which the first communication apparatus only performs cyclic shift on the imaginary part of the first modulated data based on the second cyclic shift value is used as an example. When a PTRS sequence included in each group of PTRSs in at least one group of PTRSs is a real number, the PTRS sequence is included in the real part of the first modulated data. In addition, when $K_{group}$ groups of PTRSs in each subblock have a same relative position in each sub-block, cyclic shift is performed on the imaginary part of the first modulated data, and a PTRS sequence in any sub-block is not interfered by modulated data corresponding to an original bit stream, and is not interfered by a PTRS sequence in another sub-block, so that the second communication apparatus can estimate phase noise by using the PTRS sequence, and demodulation performance is improved.

In a possible implementation, the first communication apparatus may output at least two SC-FDMA symbols, and at least two pieces of first modulated data corresponding to the at least two SC-FDMA symbols may be the same or different. This is not limited herein. It may be understood that, when the at least two pieces of first modulated data corresponding to the at least two SC-FDMA symbols are the same, same modulated data is repeatedly transmitted, so that demodulation performance of the second communication apparatus is improved. When the at least two pieces of first modulated data corresponding to the at least two SC-FDMA symbols are different, different SC-FDMA symbols transmit different modulated data, so that the second communication apparatus can obtain different modulation data, and spectral efficiency is improved.

In a possible implementation, the first communication apparatus may further output at least one symbol that includes a reference signal (reference signal). Correspondingly, the second communication apparatus may further receive, from the first communication apparatus, the at least one symbol that includes the reference signal. The symbols that include the reference signal and the SC-FDMA symbol of the second modulated data may be time-division, that is, are located at different time domain positions. For a generation method of the symbol including the reference signal, refer to a generation method of a symbol of a reference signal in a Long-term evolution system or a new radio system. This is not limited in this application.

In a possible implementation, after the second communication apparatus receives the SC-FDMA symbol of the second modulated data from the first communication apparatus, the second communication apparatus obtains the second modulated data based on the SC-FDMA symbol of the second modulated data; and the second communication apparatus obtains an original bit stream based on the second modulated data, where the second modulated data is obtained by performing cyclic shift on the first modulated data based on the cyclic shift value, the cyclic shift value is the element in the cyclic shift value set, and the cyclic shift value set includes at least two different elements. It may be understood that, because the second modulated data is obtained by performing cyclic shift, and the cyclic shift value is determined from the cyclic shift value set that includes at least two different elements, a PAPR of the SC-FDMA symbol of the second modulated data is lower than a PAPR of an OFDM waveform, and is also lower than a PAPR of a conventional SC-FDMA symbol, to be specific, is lower than a PAPR of an SC-FDMA symbol obtained without the cyclic shift, so that a PAPR of a signal is further reduced. In addition, because the PAPR of the SC-FDMA symbol of the received second modulated data is low, the demodulation performance of the second communication apparatus can be improved.

In a possible implementation, that the second communication apparatus obtains the second modulated data based on the SC-FDMA symbol of the second modulated data may be implemented in any one of the following manners.

Manner 5.1: The second communication apparatus performs Fourier transform on the SC-FDMA symbol of the second modulated data to obtain second frequency domain data; and the second communication apparatus performs inverse Fourier transform based on the second frequency domain data to obtain the second modulated data.

Manner 5.2: The second communication apparatus performs Fourier transform on the SC-FDMA symbol of the second modulated data to obtain second frequency domain data; the second communication apparatus performs equalization on a channel response of the SC-FDMA symbol of the second modulated data and the second frequency domain data to obtain equalized second frequency domain data, the channel response of the SC-FDMA symbol of the second modulated data is obtained by performing operations such as channel estimation and interpolation based on the symbol of the reference signal, and the symbol of the reference signal is received from the first communication apparatus; and the second communication apparatus performs inverse Fourier transform on the equalized second frequency domain data to obtain the second modulated data.

In a possible implementation, that the second communication apparatus obtains the original bit stream based on the second modulated data may be implemented in any one of the following manners.

Manner 6.1: The second communication apparatus receives first information (where for example, the second communication apparatus receives the first information from the first communication apparatus); the second communication apparatus performs cyclic shift on the second modulated data based on the first information to obtain the first modulated data; and the second communication apparatus sequentially performs operations such as decoding and de-interleaving on the first modulated data to obtain the original bit stream. It can be learned that the second communication apparatus may know the cyclic shift value used by the transmitting end (to be specific, the first communication apparatus), so that a probability that the second communication apparatus detects and obtains an incorrect cyclic shift value is reduced, and the demodulation performance is improved.

Manner 6.2: The second communication apparatus obtains first information from the second modulated data; the second communication apparatus performs cyclic shift on the second modulated data based on the first information to obtain the first modulated data; and the second communication apparatus sequentially performs operations such as decoding and de-interleaving on the first modulated data to obtain the original bit stream. It can be learned that the second communication apparatus may know the cyclic shift value used by the transmitting end (to be specific, the first communication apparatus), so that a probability that the second communication apparatus detects and obtains an incorrect cyclic shift value is reduced, and the demodulation performance is improved.

Manner 6.3: The second communication apparatus determines first information by detecting a cyclic shift value corresponding to the reference signal; the second communication apparatus performs cyclic shift on the second modulated data based on the first information to obtain the first modulated data; and the second communication apparatus sequentially performs operations such as decoding and de-interleaving on the first modulated data to obtain the original bit stream. It may be understood that, if the second communication apparatus obtains the second modulated data based on the SC-FDMA symbol of the second modulated data by using the manner 5.1, before the second communication apparatus determines the first information by detecting the cyclic shift value corresponding to the reference signal, the second communication apparatus may further receive the symbol of the reference signal from the first communication apparatus. It can be learned that the second communication apparatus may know the cyclic shift value used by the transmitting end (to be specific, the first communication apparatus), so that a probability that the second communication apparatus detects and obtains an incorrect cyclic shift value is reduced, and the demodulation performance is improved.

That the first modulated data further includes modulated data obtained by modulating the first information is used as an example. That the second communication apparatus obtains first information from the second modulated data includes: The second communication apparatus may obtain, from the second modulated data, the modulated data obtained by modulating the first information, to demodulate the modulated data to obtain the first information.

That the first modulated data further includes a first sequence is used as an example. That the second communication apparatus obtains first information from the second modulated data includes: The second communication apparatus may obtain the first sequence from the second modulated data, to obtain the first information based on the first sequence.

That the first modulated data further includes a PTRS sequence is used as an example. That the second communication apparatus obtains first information from the second modulated data includes: The second communication apparatus may detect a position of the PTRS sequence from the second modulated data, to determine the first information based on the position of the PTRS sequence; the second communication apparatus may obtain the PTRS sequence from the second modulated data, to determine the first information based on the PTRS sequence; or the second communication apparatus may detect a position of the PTRS sequence from the second modulated data and obtain the PTRS sequence, to determine the first information based on the position of the PTRS sequence and the PTRS sequence.

In a possible implementation, after the second communication apparatus receives a cyclic shifted SC-FDMA symbol of first modulated data from the first communication apparatus, the second communication apparatus obtains the cyclic-shifted first modulated data based on the cyclic-shifted SC-FDMA symbol of the first modulated data; and the second communication apparatus obtains the original bit stream based on the cyclic-shifted first modulated data, where the cyclic-shifted first modulated data is obtained by performing cyclic shift on the first modulated data based on the cyclic shift value, the cyclic shift value is the element in the cyclic shift value set, and the cyclic shift value set includes at least two different elements. It may be understood that, because the cyclic-shifted SC-FDMA symbol of the first modulated data is related to the cyclic shift value in the cyclic shift value set that includes at least two different elements, a PAPR of the cyclic-shifted SC-FDMA symbol of the first modulated data is lower than the PAPR of the OFDM waveform, and is also lower than the PAPR of the conventional SC-FDMA symbol, to be specific, is lower than the PAPR of the SC-FDMA symbol obtained without the cyclic shift, so that the PAPR of a signal is further reduced. In addition, because the PAPR of the SC-FDMA symbol of the received second modulated data is low, the demodulation performance of the second communication apparatus can be improved.

In a possible implementation, that the second communication apparatus obtains the cyclic-shifted first modulated data based on the cyclic-shifted SC-FDMA symbol of the first modulated data may be implemented in any one of the following manners.

Manner 7.1: The second communication apparatus performs Fourier transform on the cyclic-shifted SC-FDMA symbol of the first modulated data to obtain first frequency domain data; and the second communication apparatus performs inverse Fourier transform based on the first frequency domain data to obtain the cyclic-shifted first modulated data.

Manner 7.2: The second communication apparatus performs Fourier transform on the cyclic-shifted SC-FDMA symbol of the first modulated data to obtain first frequency domain data; the second communication apparatus performs equalization on a channel response of the cyclic-shifted SC-FDMA symbol of the first modulated data and the first frequency domain data to obtain equalized first frequency domain data, the channel response of the cyclic-shifted SC-FDMA symbol of the first modulated data is obtained by performing operations such as channel estimation and interpolation based on the symbol of the reference signal, and the symbol of the reference signal is received from the first communication apparatus; and the second communication apparatus performs inverse Fourier transform on the equalized first frequency domain data to obtain the cyclic-shifted first modulated data.

In a possible implementation, that the second communication apparatus obtains the original bit stream based on the cyclic-shifted first modulated data may be implemented in any one of the following manners.

Manner 8.1: The second communication apparatus receives the first information (where for example, the second communication apparatus receives the first information from the first communication apparatus); the second communication apparatus performs cyclic shift on the cyclic-shifted first modulated data based on the first information to obtain the first modulated data; and the second communication apparatus sequentially performs operations such as decoding and de-interleaving on the first modulated data to obtain the original bit stream. It can be learned that the second communication apparatus may know the cyclic shift value used by the transmitting end (to be specific, the first communication apparatus), so that the probability that the second communication apparatus detects and obtains an incorrect cyclic shift value is reduced, and the demodulation performance is improved.

Manner 8.2: The second communication apparatus obtains the first information from the cyclic-shifted first modulated data; the second communication apparatus performs cyclic shift on the cyclic-shifted first modulated data based on the first information to obtain the first modulated data; and the second communication apparatus sequentially performs operations such as decoding and de-interleaving on the first modulated data to obtain the original bit stream. It can be learned that the second communication apparatus may know the cyclic shift value used by the transmitting end (to be specific, the first communication apparatus), so that the probability that the second communication apparatus detects and obtains an incorrect cyclic shift value is reduced, and the demodulation performance is improved.

Manner 8.3: The second communication apparatus determines the first information by detecting a cyclic shift value corresponding to the reference signal; the second communication apparatus performs cyclic shift on the cyclic-shifted first modulated data based on the first information to obtain the first modulated data; and the second communication apparatus sequentially performs operations such as decoding and de-interleaving on the first modulated data to obtain the original bit stream. It may be understood that, if the second communication apparatus obtains the cyclic-shifted first modulated data based on the cyclic-shifted SC-FDMA symbol of the first modulated data by using the manner 7.1, before the second communication apparatus determines the first information by detecting the cyclic shift value corresponding to the reference signal, the second communication apparatus may further receive the symbol of the reference signal from the first communication apparatus. It can be learned that the second communication apparatus may know the cyclic shift value used by the transmitting end (to be specific, the first communication apparatus), so that the probability that the second communication apparatus detects and obtains an incorrect cyclic shift value is reduced, and the demodulation performance is improved.

That the first modulated data further includes the modulated data obtained by modulating the first information is used as an example. That the second communication apparatus obtains the first information from the cyclic-shifted first modulated data includes: The second communication apparatus may obtain, from the cyclic-shifted first modulated data, the modulated data obtained by modulating the first information, to demodulate the modulated data to obtain the first information.

That the first modulated data further includes the first sequence is used as an example. That the second communication apparatus obtains the first information from the cyclic-shifted first modulated data includes: The second communication apparatus may obtain the first sequence from the cyclic-shifted first modulated data, to obtain the first information based on the first sequence.

That the first modulated data further includes the PTRS sequence is used as an example. That the second communication apparatus obtains the first information from the cyclic-shifted first modulated data includes: The second communication apparatus may detect the position of the PTRS sequence from the cyclic-shifted first modulated data, to determine the first information based on the position of the PTRS sequence; the second communication apparatus may obtain the PTRS sequence from the cyclic-shifted first modulated data, to determine the first information based on the PTRS sequence; or the second communication apparatus may detect the position of the PTRS sequence from the cyclic-shifted first modulated data and obtain the PTRS sequence, to determine the first information based on the position of the PTRS sequence and the PTRS sequence.

It may be understood that, when a value of an $i_{cs}$th element in the cyclic shift value set is

$$i_{cs} \times \frac{M}{N_{cs}}, \quad -i_{cs} \times \frac{M}{N_{cs}}, \quad i_{cs} \times \frac{N}{N_{cs}} \text{ or } -i_{cs} \times \frac{N}{N_{cs}}$$, and $i_{cs}$ is an integer greater than or equal to 0 and less than or equal to $N_{cs}$ - 1, in step 402, the first communication apparatus performs cyclic shift on the SC-FDMA symbol of the first modulated data based on the cyclic shift value, to obtain the cyclic-shifted SC-FDMA symbol of the first modulated data; and in step 301, the first communication apparatus performs cyclic shift on the first modulated data based on the cyclic shift value, to obtain the second modulated data. The two operations are equivalent. Therefore, when the first communication apparatus generates the SC-FDMA symbol by using the solution in FIG. 4A and outputs the SC-FDMA symbol to the second communication apparatus, after obtaining the first information, the second communication apparatus does not need to perform cyclic shift on the cyclic-shifted SC-FDMA symbol of the first modulated data, but only needs to equivalently perform cyclic shift on the equalized first modulated data to obtain the first modulated data, so that operation complexity of the second communication apparatus is reduced.

The following describes a comparison between a PAPR of an SC-FDMA symbol generated by using the method in this application and a PAPR of a conventional SC-FDMA symbol. Specifically, refer to FIG. 7. FIG. 7 is a schematic diagram of comparing PAPRs of SC-FDMA symbols. It may be understood that, the PAPR of the SC-FDMA symbol is a ratio of maximum power of the SC-FDMA symbol to average power of the SC-FDMA symbol, and an instantaneous average power ratio (instantaneous average power ratio, IAPR) of the SC-FDMA symbol is a ratio of instantaneous power of the SC-FDMA symbol to the average power of the SC-FDMA symbol, where the maximum power of the SC-FDMA symbol may be power of a maximum value of data corresponding to all moments in the SC-FDMA symbol, and the instantaneous power of the SC-FDMA symbol may be power of data corresponding to any moment in the SC-FDMA symbol. The horizontal axis in FIG. 7 is the IAPR, and the vertical axis in FIG. 7 is a complementary cumulative distribution function (complementary cumulative distribution function, CCDF). A curve (1) in FIG. 7 is an IAPR of a conventional SC-FDMA symbol, a curve (2) in FIG. 7 is an IAPR of an SC-FDMA symbol generated by using the method in this application when there are $N_{cs}$ = 2 different cyclic shift values, a curve (3) in FIG. 7 is an IAPR of an SC-FDMA symbol generated by using the method in this application when there are $N_{cs}$ = 4 different cyclic shift values, a curve (4) in FIG. 7 is an IAPR of an SC-FDMA symbol generated by using the method in this application when there are $N_{cs}$ = 8 different cyclic shift values, and a curve (5) in FIG. 7 is an IAPR of an SC-FDMA symbol generated by using the method in this application when there are $N_{cs}$ = 16 different cyclic shift values. It can be learned that the IAPR of the SC-FDMA symbol generated by using the method in this application is lower than the IAPR of the conventional SC-FDMA symbol. When $N_{cs}$ increases, the IAPR of the SC-FDMA symbol generated by using the method in this application also decreases.

It may be understood that, to implement the foregoing functions, the network elements include a corresponding hardware structure and/or a corresponding software module for performing each function. A person skilled in the art should easily be aware that units and algorithm steps in the examples described with reference to embodiments disclosed in this specification can be implemented by hardware or a combination of hardware and computer software in this application. Whether a function is executed in a manner of hardware or hardware driven by computer software depends on specific applications and design constraints of the technical solutions. A person skilled in the art may use different methods to implement the described functions for each specific application. However, it should not be considered that the implementation goes beyond the scope of embodiments of this application.

In embodiments of this application, functional module division may be performed the terminal device or the access network device based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that the module division in embodiments of this application is an example, and is merely logical function division. In an actual implementation, there may be another division manner.

When an integrated unit is used, refer to FIG. 8. FIG. 8 is a schematic diagram of a structure of a communication apparatus according to an embodiment of this application. A communication apparatus 800 may be applied to the methods shown in FIG. 3A and FIG. 4A. As shown in FIG. 8, the communication apparatus 800 includes a processing module 801 and a transceiver module 802. The processing module 801 may be one or more processors, and the transceiver module 802 may be a transceiver or a communication interface. The communication apparatus may be configured to implement a function of a terminal device or an access network device related to any one of the foregoing method embodiments, or configured to implement a function of a network element related to any one of the foregoing method embodiments. The network element or the network function may be a network element in a hardware device, a software function running on dedicated hardware, or a virtualization function instantiated on a platform (for example, a cloud platform). Optionally, the communication apparatus 800 may further include a storage module 803, configured to store a program and/or data of the communication apparatus 800.

In an example, when the communication apparatus is used as a terminal device or a chip applied to the terminal device, the communication apparatus performs the steps performed by the terminal device in the foregoing method embodiments. The transceiver module 802 is configured to support communication with the access network device, and the like. The transceiver module specifically performs the sending and/or receiving actions performed by the terminal device in FIG. 3A and FIG. 4A, for example, supports the terminal device in performing one or more steps in step 303 and step 403, and/or another process of the technology described in this specification. The processing module 801 may be configured to: support the communication apparatus 800 in performing the processing actions in the foregoing method embodiments, for example, support the terminal device in performing one or more steps in step 301, step 302, step 401, and step 402, and/or another process of the technology described in this specification.

In an example, when an entity for executing the steps shown in FIG. 3A and FIG. 4A are the access network device or the chip applied to the access network device, the communication apparatus may be used as the access network device or the chip applied to the access network device, and perform the steps performed by the access network device in the foregoing method embodiments. The transceiver module 802 is configured to: support communication with the terminal device, and the like, and specifically perform the sending and/or receiving actions performed by the access network device in FIG. 3A and FIG. 4A, for example, support the access network device in performing one or more steps in step 303 and step 403, and/or another process of the technology described in this specification. The processing module 801 may be configured to: support the communication apparatus 800 in performing the processing actions in the foregoing method embodiments, for example, support the access network device in performing one or more steps in step 301, step 302, step 401, and step 402, and/or another process of the technology described in this specification.

In a possible implementation, when the terminal device or the access network device is a chip, the transceiver module 802 may be an interface, a pin, a circuit, or the like. The interface may be configured to input data to be processed to the processor, and may output a processing result of the processor. In specific implementation, the interface may be a general purpose input output (general purpose input output, GPIO) interface, and may be connected to a plurality of peripheral devices (such as a display (LCD), a camera (camera), a radio frequency (radio frequency, RF) module, and an antenna). The interface is connected to the processor by using a bus.

The processing module 801 may be a processor. The processor may execute the computer-executable instructions stored in the storage module, so that the chip performs the methods in the embodiments in FIG. 3A and FIG. 4A.

Further, the processor may include a controller, an arithmetic unit, and a register. For example, the controller is mainly responsible for instruction decoding, and sends a control signal for an operation corresponding to the instructions. The arithmetic unit is mainly responsible for performing a fixed-point or floating-point arithmetic operation, a shift operation, a logic operation, and the like, and may also perform an address operation and address conversion. The register is mainly responsible for storing a quantity of register operations, intermediate operation results, and the like that are temporarily stored in an instruction execution process. In specific implementation, a hardware architecture of the processor may be an application-specific integrated circuit (application-specific integrated circuit, ASIC) architecture, a microprocessor without interlocked piped stages architecture (microprocessor without interlocked piped stages architecture, MIPS), an advanced reduced instruction set computing machine (advanced RISC machine, ARM) architecture, a network processor (network processor, NP) architecture, or the like. The processor may be single-core or multi-core.

The storage module may be a storage module inside the chip, for example, a register or a cache. Alternatively, the storage module may be a storage module located outside the chip, for example, a read-only memory (Read-Only Memory, ROM), another type of static storage device that can store static information and instructions, or a random access memory (Random Access Memory, RAM).

It should be noted that a function corresponding to each of the processor and the interface may be implemented by using a hardware design, may be implemented by using a software design, or may be implemented by a combination of software and hardware. This is not limited herein.

FIG. 9 is a schematic diagram of a structure of a simplified terminal device according to an embodiment of this application. For ease of understanding and illustration, in FIG. 9, a mobile phone is used as an example of the terminal device. As shown in FIG. 9, the terminal device includes at least one processor, and may further include a radio frequency circuit, an antenna, and an input/output apparatus. The processor may be configured to process a communication protocol and communication data, and may be further configured to: control the terminal device, execute a software program, process data of the software program, and the like. The terminal device may further include a memory. The memory is mainly configured to store a software program and data. The related programs may be loaded into the memory when the communication apparatus is delivered from a factory, or may be loaded into the memory when needed later. The radio frequency circuit is mainly configured to convert a baseband signal and a radio frequency signal and process the radio frequency signal. The antenna is mainly configured to receive and send a radio frequency signal in a form of an electromagnetic wave, and the antenna is the antenna provided in embodiments of this application. The input/output apparatus, such as a touchscreen, a display screen, or a keyboard, is mainly configured to receive data input by a user and output data to the user. It should be noted that some types of terminal devices may not have an input/output apparatus.

When data needs to be sent, the processor may perform baseband processing on the data to be sent by using the manner shown in FIG. 3A or FIG. 4A, and output a baseband signal to the radio frequency circuit. The radio frequency circuit performs radio frequency processing on the baseband signal, and then sends a radio frequency signal to the outside in the form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data and processes the data. For ease of description, FIG. 9 shows only one memory and one processor. In an actual terminal device product, there may be one or more processors and one or more memories. The memory may also be referred to as a storage medium, a storage device, or the like. The memory may be disposed independently of the processor, or may be integrated with the processor. This is not limited in this embodiment of this application.

In this embodiment of this application, the antenna and the radio frequency circuit that have a receiving and sending function may be considered as a receiving unit and a sending unit of the terminal device (or may be collectively referred to as a transceiver unit), and the processor having a processing function may be considered as a processing unit of the terminal device. As shown in FIG. 9, the terminal device includes a receiving module 31, a processing module 32, and a sending module 33. The receiving module 31 may also be referred to as a receiver, a receiving machine, a receiving circuit, or the like, and the sending module 33 may also be referred to as a transmitter, a transmitting machine, a transmitting circuit, or the like. The processing module 32 may also be referred to as a processor, a processing board, a processing apparatus, or the like.

For example, the processing module 32 is configured to perform a function of the terminal device in any one of the embodiments shown in FIG. 3A and FIG. 4A.

FIG. 10 is a schematic diagram of a structure of a simplified access network device according to an embodiment of this application. The access network device includes a radio frequency signal receiving/sending and conversion part and a part 42. The radio frequency signal receiving/sending and conversion part further includes a receiving module part 41 and a sending module part 43 (which may also be collectively referred to as a transceiver module). The radio frequency signal sending/receiving and conversion part is mainly configured to send/receive a radio frequency signal and perform conversion between the radio frequency signal and a baseband signal. The part 42 is mainly configured to: perform baseband processing, control the access network device, and the like. The receiving module 41 may also be referred to as a receiver, a receiving machine, a receiving circuit, or the like, and the sending module 43 may also be referred to as a transmitter, a transmitting machine, a transmitting circuit, or the like. The part 42 is usually a control center of the access network device, and may be generally referred to as a processing module, and is configured to control the access network device to perform the steps performed by the access network device in FIG. 3A and FIG. 4A. For details, refer to the descriptions of the foregoing related parts.

The part 42 may include one or more boards. Each board may include one or more processors and one or more memories. The processor is configured to read and execute a program in the memory to implement a baseband processing function and control the access network device. If there are a plurality of boards, the boards may be interconnected to improve a processing capability. In an optional implementation, a plurality of boards may share one or more processors, a plurality of boards may share one or more memories, or a plurality of boards may simultaneously share one or more processors.

For example, for the access network device, the sending module 43 is configured to perform a function of the access network device in any embodiment shown in FIG. 3A and FIG. 4A.

An embodiment of this application further provides a communication apparatus, and the communication apparatus includes a processor, a memory, an input interface, and an output interface. The input interface is configured to receive information from a communication apparatus other than the communication apparatus, and the output interface is configured to output information to a communication apparatus other than the communication apparatus. The processor invokes a computer program stored in the memory to implement any embodiment shown in FIG. 3A and FIG. 4A.

An embodiment of this application further provides a computer-readable storage medium, and the computer-readable storage medium stores a computer program. When the computer program is run, any embodiment shown in FIG. 3A and FIG. 4A is implemented.

An embodiment of this application further provides a computer-readable storage medium, and the computer-readable storage medium stores computer-executable instructions. When the computer-executable instructions are run, any embodiment shown in FIG. 3A and FIG. 4A is implemented.

An embodiment of this application further provides a computer program product including instructions. When a computer reads and executes the instructions in the computer program product, the computer is enabled to implement any embodiment shown in FIG. 3A and FIG. 4A.

An embodiment of this application further provides a communication apparatus. The communication apparatus includes a processor, and the processor is configured to execute a computer program (or computer-executable instructions) stored in a memory. When the computer program (or the computer-executable instructions) is executed, the apparatus is enabled to perform any embodiment shown in FIG. 3A and FIG. 4A.

An embodiment of this application further provides a computer program product including computer-executable instructions. When the computer program product runs, some or all steps in any embodiment shown in FIG. 3A and FIG. 4A are performed.

An embodiment of this application further provides a computer program including computer-executable instructions. When the computer program is run, some or all steps in any embodiment shown in FIG. 3A and FIG. 4A are performed.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

**Claims**

1. A data transmission method, wherein the method comprises:

   performing cyclic shift on first modulated data based on a cyclic shift value, to obtain second modulated data;
   determining a single carrier frequency division multiple access SC-FDMA symbol of the second modulated data based on the second modulated data; and
   outputting the SC-FDMA symbol of the second modulated data, wherein
   the cyclic shift value is an element in a cyclic shift value set, and the cyclic shift value set comprises at least two different elements.

2. The method according to claim 1, wherein the first modulated data comprises a real part of the first modulated data and an imaginary part of the first modulated data, the second modulated data comprises a real part of the second modulated data and an imaginary part of the second modulated data, and the performing cyclic shift on first modulated data based on a cyclic shift value, to obtain second modulated data comprises:

   performing cyclic shift on the real part of the first modulated data based on a first cyclic shift value, to obtain the real part of the second modulated data, wherein the imaginary part of the second modulated data is the same as the imaginary part of the first modulated data; or
   performing cyclic shift on the imaginary part of the first modulated data based on a second cyclic shift value, to obtain the imaginary part of the second modulated data, wherein the real part of the second modulated data is the same as the real part of the first modulated data, wherein
the cyclic shift value comprises the first cyclic shift value or the second cyclic shift value.

3. A data transmission method, wherein the method comprises:

determining a single carrier frequency division multiple access SC-FDMA symbol of first modulated data based on the first modulated data;
performing cyclic shift on the SC-FDMA symbol of the first modulated data based on a cyclic shift value, to obtain a cyclic-shifted SC-FDMA symbol of the first modulated data; and
outputting the cyclic-shifted SC-FDMA symbol of the first modulated data, wherein
the cyclic shift value is an element in a cyclic shift value set, and the cyclic shift value set comprises at least two different elements.

4. The method according to claim 3, wherein the SC-FDMA symbol of the first modulated data comprises an SC-FDMA symbol corresponding to a real part of the first modulated data and an SC-FDMA symbol corresponding to an imaginary part of the first modulated data, and the performing cyclic shift on the SC-FDMA symbol of the first modulated data based on a cyclic shift value, to obtain a cyclic-shifted SC-FDMA symbol of the first modulated data comprises:

performing, based on a first cyclic shift value, cyclic shift on the SC-FDMA symbol corresponding to the real part of the first modulated data, to obtain a first SC-FDMA symbol, and combining the first SC-FDMA symbol and the SC-FDMA symbol corresponding to the imaginary part of the first modulated data, to obtain the cyclic-shifted SC-FDMA symbol of the first modulated data; or
performing, based on a second cyclic shift value, cyclic shift on the SC-FDMA symbol corresponding to the imaginary part of the first modulated data, to obtain a second SC-FDMA symbol, and combining the SC-FDMA symbol corresponding to the real part of the first modulated data and the second SC-FDMA symbol, to obtain the cyclic-shifted SC-FDMA symbol of the first modulated data, wherein
the cyclic shift value comprises the first cyclic shift value or the second cyclic shift value.

5. The method according to claim 3 or 4, wherein the cyclic-shifted SC-FDMA symbol of the first modulated data is an SC-FDMA symbol obtained through phase rotation.

6. The method according to any one of claims 1 to 5, wherein the method further comprises:
outputting first information, wherein the first information indicates the cyclic shift value.

7. The method according to any one of claims 1 to 6, wherein the first modulated data further comprises modulated data obtained by modulating the first information, or the first modulated data further comprises a first sequence, the first information indicates the cyclic shift value, and the first sequence corresponds to the cyclic shift value.

8. The method according to any one of claims 1 to 7, wherein a quantity $N_{cs}$ of elements in the cyclic shift value set is indicated by first radio resource control RRC signaling.

9. The method according to any one of claims 1 to 8, wherein values of the elements in the cyclic shift value set are determined based on the quantity of elements in the cyclic shift value set.

10. The method according to any one of claims 1 to 9, wherein a value of an $i_{cs}$th element in the cyclic shift value set is

$$i_{cs} \times \frac{M}{N_{cs}}$$, wherein $i_{cs}$ is an integer greater than or equal to 0 and less than or equal to $N_{cs} - 1$, $N_{cs}$ is the quantity of elements in the cyclic shift value set, and $M$ is a length of the first modulated data.

11. The method according to any one of claims 1 to 6, wherein the first modulated data further comprises at least one group of phase tracking reference signals PTRSs, and a quantity of groups of the PTRSs is determined based on the quantity of elements in the cyclic shift value set.

12. A communication apparatus, wherein the apparatus comprises a processing module and a transceiver module, wherein

the processing module is configured to: perform cyclic shift on first modulated data based on a cyclic shift value, to obtain second modulated data;

the processing module is further configured to determine a single carrier frequency division multiple access SC-FDMA symbol of the second modulated data based on the second modulated data; and

the transceiver module is configured to output the SC-FDMA symbol of the second modulated data, wherein the cyclic shift value is an element in a cyclic shift value set, and the cyclic shift value set comprises at least two different elements.

13. The apparatus according to claim 12, wherein the first modulated data comprises a real part of the first modulated data and an imaginary part of the first modulated data, the second modulated data comprises a real part of the second modulated data and an imaginary part of the second modulated data, and when performing cyclic shift on the first modulated data based on the cyclic shift value to obtain the second modulated data, the processing module is configured to:

perform cyclic shift on the real part of the first modulated data based on a first cyclic shift value, to obtain the real part of the second modulated data, wherein the imaginary part of the second modulated data is the same as the imaginary part of the first modulated data; or

perform cyclic shift on the imaginary part of the first modulated data based on a second cyclic shift value, to obtain the imaginary part of the second modulated data, wherein the real part of the second modulated data is the same as the real part of the first modulated data, wherein

the cyclic shift value comprises the first cyclic shift value or the second cyclic shift value.

14. A communication apparatus, wherein the apparatus comprises a processing module and a transceiver module, wherein

the processing module is configured to determine a single carrier frequency division multiple access SC-FDMA symbol of first modulated data based on the first modulated data;

the processing module is further configured to: perform cyclic shift on the SC-FDMA symbol of the first modulated data based on a cyclic shift value, to obtain a cyclic-shifted SC-FDMA symbol of the first modulated data; and

the transceiver module is configured to output the cyclic-shifted SC-FDMA symbol of the first modulated data, wherein

the cyclic shift value is an element in a cyclic shift value set, and the cyclic shift value set comprises at least two different elements.

15. The apparatus according to claim 14, wherein the SC-FDMA symbol of the first modulated data comprises an SC-FDMA symbol corresponding to a real part of the first modulated data and an SC-FDMA symbol corresponding to an imaginary part of the first modulated data, and when performing cyclic shift on the SC-FDMA symbol of the first modulated data based on the cyclic shift value to obtain the cyclic-shifted SC-FDMA symbol of the first modulated data, the processing module is configured to:

perform, based on a first cyclic shift value, cyclic shift on the SC-FDMA symbol corresponding to the real part of the first modulated data, to obtain a first SC-FDMA symbol, and combine the first SC-FDMA symbol and the SC-FDMA symbol corresponding to the imaginary part of the first modulated data, to obtain the cyclic-shifted SC-FDMA symbol of the first modulated data; or

perform, based on a second cyclic shift value, cyclic shift on the SC-FDMA symbol corresponding to the imaginary part of the first modulated data, to obtain a second SC-FDMA symbol, and combine the SC-FDMA symbol corresponding to the real part of the first modulated data and the second SC-FDMA symbol, to obtain the cyclic-shifted SC-FDMA symbol of the first modulated data, wherein

the cyclic shift value comprises the first cyclic shift value or the second cyclic shift value.

16. A communication apparatus, comprising a logic circuit and an input/output interface, wherein the logic circuit is configured to: perform cyclic shift on first modulated data based on a cyclic shift value, to obtain second modulated data; the logic circuit is further configured to determine a single carrier frequency division multiple access SC-FDMA symbol of the second modulated data based on the second modulated data; and the input/output interface is configured to output the SC-FDMA symbol of the second modulated data, wherein the cyclic shift value is an element in a cyclic shift value set, and the cyclic shift value set comprises at least two different elements.

17. The method according to claim 16, wherein the first modulated data comprises a real part of the first modulated data and an imaginary part of the first modulated data, the second modulated data comprises a real part of the second modulated data and an imaginary part of the second modulated data, and when performing cyclic shift on the first modulated data based on the cyclic shift value to obtain the second modulated data, the logic circuit is configured to: perform cyclic shift on the real part of the first modulated data based on a first cyclic shift value, to obtain the real part of the second modulated data, wherein the imaginary part of the second modulated data is the same as the imaginary part of the first modulated data; or perform cyclic shift on the imaginary part of the first modulated data based on a second cyclic shift value, to obtain the imaginary part of the second modulated data, wherein the real part of the second modulated data is the same as the real part of the first modulated data, wherein the cyclic shift value comprises the first cyclic shift value or the second cyclic shift value.

18. A communication apparatus, comprising a logic circuit and an input/output interface, wherein the logic circuit is configured to determine an SC-FDMA symbol of first modulated data based on the first modulated data; the logic circuit is further configured to: perform cyclic shift on the SC-FDMA symbol of the first modulated data based on a cyclic shift value, to obtain a cyclic-shifted SC-FDMA symbol of the first modulated data; and the input/output interface is configured to output the cyclic-shifted SC-FDMA symbol of the first modulated data, wherein the cyclic shift value is an element in a cyclic shift value set, and the cyclic shift value set comprises at least two different elements.

19. The method according to claim 18, wherein the SC-FDMA symbol of the first modulated data comprises an SC-FDMA symbol corresponding to a real part of the first modulated data and an SC-FDMA symbol corresponding to an imaginary part of the first modulated data, and when performing cyclic shift on the SC-FDMA symbol of the first modulated data based on the cyclic shift value to obtain the cyclic-shifted SC-FDMA symbol of the first modulated data, the logic circuit is configured to: perform, based on a first cyclic shift value, cyclic shift on the SC-FDMA symbol corresponding to the real part of the first modulated data, to obtain a first SC-FDMA symbol, and combine the first SC-FDMA symbol and the SC-FDMA symbol corresponding to the imaginary part of the first modulated data, to obtain the cyclic-shifted SC-FDMA symbol of the first modulated data; or perform, based on a second cyclic shift value, cyclic shift on the SC-FDMA symbol corresponding to the imaginary part of the first modulated data, to obtain a second SC-FDMA symbol, and combine the SC-FDMA symbol corresponding to the real part of the first modulated data and the second SC-FDMA symbol, to obtain the cyclic-shifted SC-FDMA symbol of the first modulated data, wherein the cyclic shift value comprises the first cyclic shift value or the second cyclic shift value.

20. The apparatus according to claim 14, 15, 18, or 19, wherein the cyclic-shifted SC-FDMA symbol of the first modulated data is an SC-FDMA symbol obtained through phase rotation.

21. The apparatus according to any one of claims 12 to 20, wherein the transceiver module is further configured to output first information, wherein the first information indicates the cyclic shift value.

22. The apparatus according to any one of claims 12 to 21, wherein the first modulated data further comprises modulated data obtained by modulating the first information, or the first modulated data further comprises a first sequence, the first information indicates the cyclic shift value, and the first sequence corresponds to the cyclic shift value.

23. The apparatus according to any one of claims 12 to 22, wherein a quantity $N_{cs}$ of elements in the cyclic shift value set is indicated by first radio resource control RRC signaling.

24. The apparatus according to any one of claims 12 to 23, wherein values of the elements in the cyclic shift value set are determined based on the quantity of elements in the cyclic shift value set.

25. The apparatus according to any one of claims 12 to 24, wherein a value of an $i_{cs}$th element in the cyclic shift value set is $i_{cs} \times \dfrac{M}{N_{cs}}$, wherein $i_{cs}$ is an integer greater than or equal to 0 and less than or equal to $N_{cs}$ - 1, $N_{cs}$ is the quantity of elements in the cyclic shift value set, and M is a length of the first modulated data.

26. The apparatus according to any one of claims 12 to 25, wherein the first modulated data further comprises at least one group of phase tracking reference signals PTRSs, and a quantity of groups of the PTRSs is determined based on the quantity of elements in the cyclic shift value set.

27. A communication apparatus, configured to perform the method according to any one of claims 1 to 11.

**28.** A communication apparatus, comprising a processor, wherein the processor is coupled to a memory, the memory stores instructions, and the processor is configured to execute the instructions, so that the communication apparatus implements the method according to any one of claims 1 to 11.

**29.** A computer-readable storage medium, wherein the computer-readable storage medium stores a computer program, and when the computer program is run, the method according to any one of claims 1 to 11 is performed.

**30.** A computer program product comprising instructions, wherein when the computer program product runs on a computer, the method according to any one of claims 1 to 11 is performed.

**31.** A communication system, comprising one or more of the following: the communication apparatus in the possible implementation of any one of claims 12 to 28.

FIG. 1

FIG. 2

A first communication apparatus performs cyclic shift on first modulated data based on a cyclic shift value, to obtain second modulated data, where the cyclic shift value is an element in a cyclic shift value set, and the cyclic shift value set includes at least two different elements — 301

The first communication apparatus determines a single carrier frequency division multiple access SC-FDMA symbol of the second modulated data based on the second modulated data — 302

The first communication apparatus outputs the SC-FDMA symbol of the second modulated data — 303

FIG. 3A

| Real part of first modulated data | → First cyclic shift value → | Real part of second modulated data | → | | → | Second modulated data |
|---|---|---|---|---|---|---|
| Imaginary part of first modulated data | → | Imaginary part of the first modulated data | → | Combination | | |

3-1

| Real part of first modulated data | → | Real part of the first modulated data | → | | → | Second modulated data |
|---|---|---|---|---|---|---|
| Imaginary part of first modulated data | → Second cyclic shift value → | Imaginary part of second modulated data | → | Combination | | |

3-2

| Real part of first modulated data | → First cyclic shift value → | Real part of second modulated data | → | | → | Second modulated data |
|---|---|---|---|---|---|---|
| Imaginary part of first modulated data | → Second cyclic shift value → | Imaginary part of second modulated data | → | Combination | | |

3-3

FIG. 3B

A first communication apparatus determines a single carrier frequency division multiple access SC-FDMA symbol of first modulated data based on the first modulated data | 401

The first communication apparatus performs cyclic shift on the SC-FDMA symbol of the first modulated data based on a cyclic shift value, to obtain a cyclic-shifted SC-FDMA symbol of the first modulated data | 402

The first communication apparatus outputs the cyclic-shifted SC-FDMA symbol of the first modulated data | 403

FIG. 4A

4-1

Real part of first modulated data → Fourier transform → Inverse Fourier transform → First cyclic shift value → First single carrier frequency division multiple access SC-FDMA symbol → Combination → Cyclic-shifted SC-FDMA symbol of the first modulated data

Imaginary part of first modulated data → Fourier transform → Inverse Fourier transform → SC-FDMA symbol corresponding to the imaginary part of the first modulated data → Combination

4-2

Real part of first modulated data → Fourier transform → Inverse Fourier transform → SC-FDMA symbol corresponding to the real part of the first modulated data → Combination → Cyclic-shifted SC-FDMA symbol of the first modulated data

Imaginary part of first modulated data → Fourier transform → Inverse Fourier transform → Second cyclic shift value → Second SC-FDMA symbol → Combination

4-3

Real part of first modulated data → Fourier transform → Inverse Fourier transform → First cyclic shift value → First SC-FDMA symbol → Combination → Cyclic-shifted SC-FDMA symbol of the first modulated data

Imaginary part of first modulated data → Fourier transform → Inverse Fourier transform → Second cyclic shift value → Second SC-FDMA symbol → Combination

TO FIG. 4B-2
FIG. 4B-1

~

```
┌──────────┐   ┌──────────┐   ┌──────────┐   ┌──────────┐  First cyclic   ┌──────────────┐        ┌─────────────┐   ┌─────────────┐
│  First   │   │ Fourier  │   │ Inverse  │   │   Data   │  shift value    │  First SC-FDMA│        │             │   │Cyclic-shifted│
│modulated │──▶│transform │──▶│ Fourier  │──▶│separation│──────────────▶ │    symbol     │──▶     │ Combination │──▶│  SC-FDMA    │
│   data   │   │          │   │transform │   │          │                 └──────────────┘        │             │   │ symbol of the│
└──────────┘   └──────────┘   └──────────┘   │          │                 ┌──────────────┐        │             │   │    first    │
                                             │          │                 │SC-FDMA symbol │        │             │   │  modulated  │
                                             │          │──────────────▶ │corresponding to an──▶  │             │   │    data     │
                                             └──────────┘                 │imaginary part of the  └─────────────┘   └─────────────┘
                                                                          │first modulated data│
                                                         4-4              └──────────────┘
```

4-4

```
┌──────────┐   ┌──────────┐   ┌──────────┐   ┌──────────┐                 ┌──────────────┐        ┌─────────────┐   ┌─────────────┐
│  First   │   │ Fourier  │   │ Inverse  │   │   Data   │                 │SC-FDMA symbol │        │             │   │Cyclic-shifted│
│modulated │──▶│transform │──▶│ Fourier  │──▶│separation│──────────────▶ │corresponding to a──▶   │ Combination │──▶│  SC-FDMA    │
│   data   │   │          │   │transform │   │          │  Second         │real part of the first │             │   │ symbol of the│
└──────────┘   └──────────┘   └──────────┘   │          │  cyclic         │modulated data│        │             │   │    first    │
                                             │          │  shift value    └──────────────┘        │             │   │  modulated  │
                                             │          │                 ┌──────────────┐        │             │   │    data     │
                                             │          │──────────────▶ │ Second SC-FDMA──▶      │             │   │             │
                                             └──────────┘                 │    symbol     │        └─────────────┘   └─────────────┘
                                                         4-5              └──────────────┘
```

4-5

```
┌──────────┐   ┌──────────┐   ┌──────────┐   ┌──────────┐  First cyclic   ┌──────────────┐        ┌─────────────┐   ┌─────────────┐
│  First   │   │ Fourier  │   │ Inverse  │   │   Data   │  shift value    │  First SC-FDMA│        │             │   │Cyclic-shifted│
│modulated │──▶│transform │──▶│ Fourier  │──▶│separation│──────────────▶ │    symbol     │──▶     │ Combination │──▶│  SC-FDMA    │
│   data   │   │          │   │transform │   │          │  Second         └──────────────┘        │             │   │ symbol of the│
└──────────┘   └──────────┘   └──────────┘   │          │  cyclic         ┌──────────────┐        │             │   │    first    │
                                             │          │  shift value    │ Second SC-FDMA│       │             │   │  modulated  │
                                             │          │──────────────▶ │    symbol     │──▶     │             │   │    data     │
                                             └──────────┘                 └──────────────┘        └─────────────┘   └─────────────┘
                                                         4-6
```

4-6

FIG. 4B-2

5-1 Cyclic shift values corresponding to all symbols may be different

Symbol 0    Symbol 1    Symbol 2    Symbol 3    Symbol 4    Symbol 5    Symbol 6

Cyclic
prefix

Single carrier frequency division
multiple access SC-FDMA symbol
including first modulated data

Symbol including a
reference signal

5-2 Cyclic shift values corresponding to two
consecutive pieces of first modulated data are the same

Symbol 0    Symbol 1    Symbol 2    Symbol 3    Symbol 4    Symbol 5    Symbol 6

Same cyclic shift value          Same cyclic shift value

FIG. 5

6-1 Four groups of phase tracking reference signals PTRSs

Relative   One group   Relative              Relative              Relative
position   of PTRSs    position              position              position

Sub-block 1          Sub-block 2          Sub-block 3          Sub-block 4

6-2 Eight groups of phase tracking reference signals PTRSs

One group of PTRSs

Sub-block 1          Sub-block 2          Sub-block 3          Sub-block 4

FIG. 6

CCDF: complementary cumulative distribution function
IAPR: instantaneous average power ratio

FIG. 7

Communication
apparatus 800

FIG. 8

FIG. 9

Antenna

Radio frequency unit

41

43

Memory | Processor

42

FIG. 10

| **INTERNATIONAL SEARCH REPORT** | International application No. |
|---|---|
| | **PCT/CN2022/108042** |

| **A.** | **CLASSIFICATION OF SUBJECT MATTER** |
|---|---|

H04L 27/26(2006.01)i

According to International Patent Classification (IPC) or to both national classification and IPC

| **B.** | **FIELDS SEARCHED** |
|---|---|

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNTXT; CJFD; ENTXTC; VEN; VCN; 3GPP: 循环移位, 相移, PAPR, SC-FDMA, 单载波频分多址, 峰均功率比, 降低 PAPR, 调制, 实部, 虚部, 符号, 集合, 元素, cyclic shift, phase shift, modulation, real part, imaginary part, collection, element

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 104022994 A (UNIVERSITY OF ELECTRONIC SCIENCE AND TECHNOLOGY OF CHINA) 03 September 2014 (2014-09-03)<br>description, paragraphs 0003-0033 | 1-31 |
| X | CN 108600143 A (UNIVERSITY OF ELECTRONIC SCIENCE AND TECHNOLOGY OF CHINA) 28 September 2018 (2018-09-28)<br>description, paragraphs 0002-0027 | 1-31 |
| X | CN 102577296 A (LG ELECTRONICS INC.) 11 July 2012 (2012-07-11)<br>description, paragraphs 0002-0018 | 1-31 |
| A | CN 110868280 A (BEIJING SAMSUNG TELECOM R&D CENTER et al.) 06 March 2020 (2020-03-06)<br>entire document | 1-31 |
| A | CN 104065443 A (SAMSUNG ELECTRONICS CO., LTD.) 24 September 2014 (2014-09-24)<br>entire document | 1-31 |
| A | US 2008212555 A1 (SAMSUNG ELECTRONICS CO., LTD.) 04 September 2008 (2008-09-04)<br>entire document | 1-31 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 October 2022** | **18 October 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/108042** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2010074343 A1 (QUALCOMM INC.) 25 March 2010 (2010-03-25)<br>entire document | 1-31 |

Form PCT/ISA/210 (second sheet) (January 2015)

**INTERNATIONAL SEARCH REPORT**
Information on patent family members

| International application No. |
| --- |
| **PCT/CN2022/108042** |

| Patent document cited in search report | | | Publication date (day/month/year) | Patent family member(s) | | | Publication date (day/month/year) |
| --- | --- | --- | --- | --- | --- | --- | --- |
| CN | 104022994 | A | 03 September 2014 | None | | | |
| CN | 108600143 | A | 28 September 2018 | None | | | |
| CN | 102577296 | A | 11 July 2012 | WO | 2011034357 | A2 | 24 March 2011 |
| | | | | CA | 2774414 | A1 | 24 March 2011 |
| | | | | AU | 2010296221 | A1 | 12 April 2012 |
| | | | | KR | 20110030399 | A | 23 March 2011 |
| | | | | US | 2016100386 | A1 | 07 April 2016 |
| | | | | EP | 2479948 | A2 | 25 July 2012 |
| | | | | ES | 2590329 | T3 | 21 November 2016 |
| | | | | US | 2012250655 | A1 | 04 October 2012 |
| | | | | US | 2018198587 | A1 | 12 July 2018 |
| | | | | HU | E029583 | T2 | 28 March 2017 |
| | | | | US | 2015043513 | A1 | 12 February 2015 |
| | | | | JP | 2013505621 | A | 14 February 2013 |
| | | | | US | 2017134132 | A1 | 11 May 2017 |
| CN | 110868280 | A | 06 March 2020 | None | | | |
| CN | 104065443 | A | 24 September 2014 | EP | 1942597 | A2 | 09 July 2008 |
| | | | | US | 2014233501 | A1 | 21 August 2014 |
| | | | | MX | 2009007253 | A | 10 July 2009 |
| | | | | US | 2015163005 | A1 | 11 June 2015 |
| | | | | ES | 2408184 | T3 | 18 June 2013 |
| | | | | WO | 2008082280 | A1 | 10 July 2008 |
| | | | | WO | 2008082279 | A1 | 10 July 2008 |
| | | | | KR | 20080064756 | A | 09 July 2008 |
| | | | | DE | 202008018354 | U1 | 28 March 2013 |
| | | | | CN | 104052566 | A | 17 September 2014 |
| | | | | MY | 153221 | A | 29 January 2015 |
| | | | | DK | 1942597 | T3 | 13 May 2013 |
| | | | | PL | 1942597 | T3 | 31 July 2013 |
| | | | | US | 2015180624 | A1 | 25 June 2015 |
| | | | | US | 2008212555 | A1 | 04 September 2008 |
| | | | | PT | 1942597 | E | 13 May 2013 |
| | | | | US | 2008273516 | A1 | 06 November 2008 |
| | | | | EP | 1942596 | A2 | 09 July 2008 |
| | | | | US | 2015163796 | A1 | 11 June 2015 |
| | | | | ES | 2408183 | T3 | 18 June 2013 |
| | | | | DE | 202008018353 | U1 | 28 March 2013 |
| | | | | PL | 1942596 | T3 | 31 July 2013 |
| | | | | US | 2012269160 | A1 | 25 October 2012 |
| | | | | US | 2015163779 | A1 | 11 June 2015 |
| | | | | US | 2015163006 | A1 | 11 June 2015 |
| US | 2008212555 | A1 | 04 September 2008 | DE | 202008018353 | U1 | 28 March 2013 |
| | | | | PL | 1942596 | T3 | 31 July 2013 |
| | | | | US | 2012269160 | A1 | 25 October 2012 |
| | | | | US | 2015163779 | A1 | 11 June 2015 |
| | | | | US | 2015163006 | A1 | 11 June 2015 |
| | | | | EP | 1942597 | A2 | 09 July 2008 |
| | | | | US | 2014233501 | A1 | 21 August 2014 |
| | | | | CN | 104065443 | A | 24 September 2014 |

Form PCT/ISA/210 (patent family annex) (January 2015)

# EP 4 380 118 A1

## INTERNATIONAL SEARCH REPORT
### Information on patent family members

| International application No. |
| --- |
| **PCT/CN2022/108042** |

| Patent document cited in search report | | | Publication date (day/month/year) | Patent family member(s) | | | Publication date (day/month/year) |
| --- | --- | --- | --- | --- | --- | --- | --- |
| | | | | MX | 2009007253 | A | 10 July 2009 |
| | | | | US | 2015163005 | A1 | 11 June 2015 |
| | | | | ES | 2408184 | T3 | 18 June 2013 |
| | | | | WO | 2008082280 | A1 | 10 July 2008 |
| | | | | WO | 2008082279 | A1 | 10 July 2008 |
| | | | | KR | 20080064756 | A | 09 July 2008 |
| | | | | DE | 202008018354 | U1 | 28 March 2013 |
| | | | | CN | 104052566 | A | 17 September 2014 |
| | | | | MY | 153221 | A | 29 January 2015 |
| | | | | DK | 1942597 | T3 | 13 May 2013 |
| | | | | PL | 1942597 | T3 | 31 July 2013 |
| | | | | US | 2015180624 | A1 | 25 June 2015 |
| | | | | PT | 1942597 | E | 13 May 2013 |
| | | | | US | 2008273516 | A1 | 06 November 2008 |
| | | | | EP | 1942596 | A2 | 09 July 2008 |
| | | | | US | 2015163796 | A1 | 11 June 2015 |
| | | | | ES | 2408183 | T3 | 18 June 2013 |
| US | 2010074343 | A1 | 25 March 2010 | RU | 2011116059 | A | 27 October 2012 |
| | | | | EP | 2353266 | A1 | 10 August 2011 |
| | | | | IN | 1793CHENP2011 | A | 20 January 2012 |
| | | | | TW | 201019624 | A | 16 May 2010 |
| | | | | ZA | 201102910 | B | 26 September 2012 |
| | | | | WO | 2010039554 | A1 | 08 April 2010 |
| | | | | BR | PI0918961 | A2 | 09 January 2018 |
| | | | | JP | 2012503946 | A | 09 February 2012 |
| | | | | KR | 20110076962 | A | 06 July 2011 |
| | | | | CN | 102224719 | A | 19 October 2011 |
| | | | | CA | 2736959 | A1 | 08 April 2010 |
| | | | | JP | 2014112867 | A | 19 June 2014 |
| | | | | JP | 2016103838 | A | 02 June 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110867200